# EUROPEAN PATENT SPECIFICATION

(11) **EP 3 813 510 B1**
(45) Date of publication and mention of the grant of the patent: **06.03.2024**
(21) Application number: 19703622.1
(22) Date of filing: 22.01.2019
(51) Int. Cl.: A01G 31/02

(54) **MULTILAYER SEED GERMINATION AND PLANT DEVELOPMENT MEDIA**
MEHRSCHICHTIGE SAMENKEIMUNG UND PFLANZENENTWICKLUNGSMEDIUM
MILIEUX MULTICOUCHES DE GERMINATION DE SEMENCES ET DE DÉVELOPPEMENT DE PLANTES

(30) Priority: 29.06.2018 US 201862692361 P
(43) Date of publication of application: 05.05.2021
(73) Proprietor: Just Greens, LLC, Newark, NJ 07105 (US)
(72) Inventor: FILIPPOV, Alexander, Harrison, NJ 07029 (US); BUELOW, Roger, Pepper Pike, OH 44124 (US)
(74) Representative: Studio Torta S.p.A.
(86) International application number: PCT/US2019/014561
(87) International publication number: WO 2020/005319

(56) References cited:
- GB-A- 2 556 469
- KR-A- 20150 086 867

## Description

### BACKGROUND

### Technical Field

Embodiments of the disclosure relate to soilless multilayer seed germination and plant development media useful in aeroponic and hydroponic farming.

### Background Art

Aeroponic farming involves spraying a liquid nutrient solution on the roots of developing plants. The roots of these plants are generally bare and suspended in a growth chamber where the nutrients are sprayed. In some versions of aeroponic farming, seeds are deposited on the top surface a cloth that can be supported by a frame. The seeds are germinated, and then cloth on the frame is placed in the growth chamber. In the growth chamber, the upper side of the cloth is subjected to light of the proper wavelength and intensity to promote growth in developing the plants, and the underside of the cloth and the developing root mass receives the nutrient solution. The plants resulting from the seeds are harvested at a desired stage of growth. The growth chambers can be stacked on each other and/or located side-by-side to save space within a facility and to permit sharing of the subsystems, which provide the nutrient solution, temperature, humidity, and carbon dioxide to the growth chambers. A rapidly developing and healthy plant canopy is beneficial in these systems because it reduces the amount of light that reaches the cloth medium and can reduce the formation of harmful algae.

Cloth materials have been used as germination and growing substrates or media in aeroponic farming. Algae formation can occur on the relatively high surface area of the cloth fibers in the presence of moisture laden with nutrients and the light used to germinate the seeds and grow the plants. Algae growth competes with germinating seeds and growing plants for nutrients, light, and moisture. The presence of algae on these growth substrates is esthetically undesirable and makes cleaning of the growth substrates between uses more difficult and increases costs. The presence of algae on the growth substrate can also result in plugging of the substrate and interferes with the aeroponic spray and air flow. Algae formation can also occur on the nozzles and the underlying drainage trays which needs to be removed by cleaning and filtration to prevent the spread of the algae into other parts of the growing system. This added cleaning, the expense of filters, and the associated growth tower downtime for filter changeouts and hardware cleaning are costly.

Algae growth and plant rot are more common on low spots of the cloth growth medium where excess moisture and seeds accumulate and contact each other in the presence of light. Automatic seeders can be used to space seeds more uniformly on the growth medium to try and overcome this, but these are expensive, costly to maintain, and do not address the problem of low spots on the medium. Algae growth can also occur on surfaces below the cloth growth medium containing the nutrient solutions. Light passing through gaps between the stretched cloth growth medium and frame or holes in the medium allow direct light to pass through the openings which can support algae growth.

Evaporation of water from the cloth used in some aeroponic farming can lead to increased costs required for air conditioning of the indoor farm and water use.

Known systems and methods for germinating seeds and growing plants are disclosed in document GB2556469 A.

Thus, a need exists for improved growing media and substrates that can be used in aeroponic and hydroponic farming, that improve harvest yields, reduce algae growth, and reduce costs associated with cleaning and repairing of cloth growth media.

### SUMMARY

The aforementioned aims are reached by an article for germinating seeds and growing plants and a method of harvesting plants as well as a method of planting seeds as claimed in the appended set of claims,

Algae growth on soilless growth media used for aeroponic and/or hydroponic farming can be reduced or eliminated by a multilayer article or flat that supports germinating seeds and growing plants that includes a light barrier layer with a plurality of openings, the un-opened portions of the light barrier layer have a light transmittance, measured by intensity, that is less than the amount of the light transmittance through any opening in the light barrier layer. The light barrier layer is freely separable from and positioned atop a soilless growth medium. The multilayer article can further include a bottom support layer that has plurality of openings. The openings pass through the bottom support layer and accommodate one or more root masses from overlying plants. The openings in the bottom support layer also allow mist or fog or source of nutrients located below the support layer to reach the soilless growth medium. The soilless growth medium may be positioned atop the bottom support layer and is freely separable and not fixed to the bottom support layer. In some embodiments of the disclosure the close proximity of the light barrier layer with a top surface of the soilless growth medium forms a seal or barrier. The seal or barrier precludes seeds in the light barrier openings from becoming positioned between solid portions of the light barrier layer and the soilless growth medium during use of the flat. The soilless growth medium supports seed germination, penetration of roots from developing plants through the medium, and prevents the direct passage of nutrient mist or fog droplets through the medium.

According to the invention the multilayer article or flat also includes an upper layer that is separable from and positioned atop the light barrier layer. The upper layer has a plurality of openings that overlap a portion or all of the area of the openings in light barrier layer. The overlap between the opening(s) in the upper layer and the opening(s) in the light barrier layer can be sufficient for light to reach the soilless growth medium through the openings and/or reach germinating seeds and develop plants positioned in the openings on the soilless growth medium. In still other embodiments of the disclosure, the openings in the upper layer are smaller than the openings in the light barrier layer and the openings in the two layers overlap. The openings in the upper layer are sufficiently large to accommodate a single seed in each upper layer opening while the openings in the light barrier layer are sufficiently large to accommodate a single seed during imbibition and subsequent plant development. In some embodiments of the disclosure, one or more openings in the light barrier layer include a single seed and the seed contacts the underlying growth medium.

In some embodiments of the disclosure, one or more of the light barrier layer, the upper layer, or the light barrier layer and upper layer can include a fluorescent material or a phosphor.

In some embodiments, the upper layer can be slideably positioned atop the light barrier layer and the upper layer opening bottom edges and light barrier layer opening top edges shaped to cut plant stems when the upper layer and light barrier layer are moved relative to one another.

In some embodiments of the disclosure the light barrier layer, the upper layer, or a combination of these, are plates which can be separated from one another with the stems of the plants passing through the openings in the light barrier layer and the upper layer so that a stem cutter can pass between the plates and cut the stems.

Embodiments of the disclosure can include those articles having one or more seeds positioned in a plurality of the openings in the light barrier layer. Embodiments of the disclosure can include those articles having one, two, or three seeds positioned in a plurality of the openings in the light barrier layer. In some embodiments of the disclosure, each opening in the light barrier layer that has a seed has a single seed in the opening. Seeds in an opening of the light barrier layer contact the growth medium which is located below the light barrier layer. In some embodiments the light barrier layer includes a fluorescent material or a phosphor.

Embodiments of the disclosure include methods of seeding the multilayer article or flat as well as germinating and developing plants from the seeds. In some embodiments, the method can include positioning seeds into a plurality of openings in a light barrier layer so that the seeds contact the exposed growth media in the openings. In other embodiments, the method can include positioning one, two, or three seeds into a plurality of openings in a light barrier layer so that the seeds contact the exposed growth media in the openings. In some embodiments, any of the plurality of openings in the light barrier layer that have a seed contain a single seed and the light barrier layer overlies a soilless growth medium. The light barrier layer is not bonded or fixed to the growth medium. The soilless growth medium can be atop a support layer that has openings to accommodate one or more root masses growing through the soilless growth medium. According to the invention the article comprises an upper layer that has a plurality of openings positioned atop the light barrier layer. The openings in the upper layer overlap a portion or all of the area of the openings in light barrier layer, the overlap between the openings in the separate layers is sufficient for light to illuminate the one or more of the soilless growth media, germinating seeds, developing plants, or any combination of these through the openings in the light barrier layer. The close proximity, which may include physical contact and/or compression, of the light barrier layer bottom surface and/or opening edge surfaces with the soilless growth medium layer, forms a barrier or loose seal that prevent seeds from becoming positioned or trapped between these layers.

In embodiments of the method, the light barrier layer can include a fluorescent material that converts a portion or all of the light that is incident on surfaces of the article, for example surfaces that are not those of the plants, to a longer wavelength light of which a portion of the longer wavelength light can be re-directed to the germinating seeds and/or developing plants. In other embodiments, one or more of the light barrier layer, the upper layer, or the light barrier layer and upper layer can include a fluorescent material. In some other embodiments, one or more of the light barrier layer, the upper layer, or the light barrier layer and upper layer can include a light dispersing layer whereby unused light is redirected through the layer and to the leaves. In yet another embodiment, the upper most layer, either upper layer or light barrier layer, is reflective and re-directs unused light towards leaves. Using a layer containing a fluorescent or phosphor material, light reflecting layer, or light dispersing layer with openings for seeds can be used to redirect the light not only down to the seeds but also up from the flat surface to the leaves.

According to the invention the multilayer article or flat also includes an upper layer that is separable from and positioned atop the light barrier layer. The upper layer has a plurality of openings that overlap a portion or all of the area of the openings in light barrier layer. The overlap between the opening in the upper layer and the openings in the light barrier layer is sufficient for light to illuminate the one or more of the soilless growth media, germinating seeds, to develop and grow plants, or any combination of these through the openings in the light barrier layer. In still other embodiments of the disclosure, the openings in the upper layer are smaller than the openings in the light barrier layer and the openings in the two layers overlap sufficiently for light to illuminate the one or more of the soilless growth media, germinating seeds, developing plants or any combination of these through the openings in the light barrier layer. The openings in the upper layer are sufficiently large to accommodate a single seed in each upper layer opening while the openings in the light barrier layer are sufficiently large to accommodate a single seed during imbibition and subsequent plant development. In some embodiments of the disclosure, a plurality of openings in the light barrier layer include a single seed and the seed contacts the underlying growth medium.

In one embodiment of the method, the positioning of seeds into the plurality of openings in the light barrier layer includes receiving seeds from a plurality of openings in the upper layer that drop down into overlapping light barrier openings. In some embodiments, the size of the openings of the upper layer are substantially the same size as the seeds, within for example a distribution of sizes, and the openings in the light barrier layer are larger than the overlapping openings in the upper layer.

In various embodiments, the method can include the acts or steps of providing a nutrient solution onto a bottom surface of the soilless growth medium through the openings in the support layer. The nutrient solution can be provided to the roots as a fine mist or a fog of the solution, or by contacting a portion of the roots with the solution in a container. The method can further include the acts or steps of irradiating a portion of the light barrier layer with light of suitable frequencies and intensity. In some embodiments, light that is unused by the developing plants that strikes the light barrier layer and/or the upper layer can be converted to longer wavelength radiation and directed to a portion of germinating seeds or developing plants.

Advantages of embodiments of the disclosure include a more uniform growing pattern on the growth medium since seeds may not move over the cloth after seeding because the seeds may be essentially captured or retained in the cavity formed by the openings of the light barrier layer and the soilless growth medium. The multilayer articles or flats disclosed herein can be used to germinate seeds and can be supplied with nutrients and light in growth chambers. The solid or closed portions of the various layers such as the light barrier layer, the upper layer, the bottom support layer and combinations of these can minimize light penetration and may reduce heating of the nutrient solution and reduce evaporation from the growth medium. The closed portions of the various layers such as the light barrier layer, the upper layer, the bottom support layer and combinations of these minimize light penetration and may also reduce algae growth on the growth medium, the nozzles, and inside drip pans or nutrient containers. The closed or covered areas atop the growth medium, provided by the overlying light barrier layer, may significantly reduce the area that the plant leaves can directly contact the moist growth medium, which may further reduce plant rot and contact with algae. Having a light barrier layer and/or an upper layer can also decrease evaporation from the growth medium, thereby reducing air conditioning and water consumption in an indoor farm, when compared to uncovered growth media.

One advantage of embodiments where the upper layer and light barrier layer are separable is the ability to "stand" plants up and pass a cutter between separated layers to give better harvesting and effectively eliminate "flopped" plants passing beneath the cutter. Standing the plants up can minimize damage to the leaves and increase harvest yield. By selecting the amount of separation between layers where a cutter passes, the height of plant stems in the harvested product can also be tailored for the end user of the produce. The ability to control the separation of the flat's layers can be used to control and vary the length of the cut stem and allows harvesting of microgreens, leafy greens, and other plants simply by changing the separation between the various layers.

In some embodiments, a flexible layer atop the light barrier layer or upper layer, for example a sheet or film that has openings aligned with the upper layer openings, the flexible layer can be formed into the shape of a basket or pan during or after cutting, since the cutting occurs below the flexible layer, so that plants can be harvested in batches and traced to a particular flat or location in the farm.

The embodiments disclosed herein meets these and other needs by providing a system and method for germinating seeds and developing plants with reduced algal growth and improved plant harvest yield.

### BRIEF DESCRIPTION OF THE DRAWINGS

- FIG. 1 is an illustration of an embodiment of the disclosure with different layers.
- FIG. 2A is an illustration of an embodiment of the disclosure with different layers that illustrate separation of the top two layers, and FIG. 2B depicts passing a cutter between the separated layers to harvest plants.
- FIG. 3 is an illustration of an embodiment of the disclosure with different layers showing that the plurality of openings in the upper layer are smaller than the plurality of openings in the light barrier layer below and that the openings in the two layers overlap.
- FIG. 4A is an illustration of an embodiment of the disclosure with different layers atop the growth medium that shows the openings in the upper layer being smaller than the openings in the light barrier layer below, that the openings in the two layers overlap, and the positioning of seeds in the openings of the light barrier layer. FIG. 4B is an illustration of seeds positioned in openings in the barrier layer and contacting the soilless growth medium after removal of the upper layer.

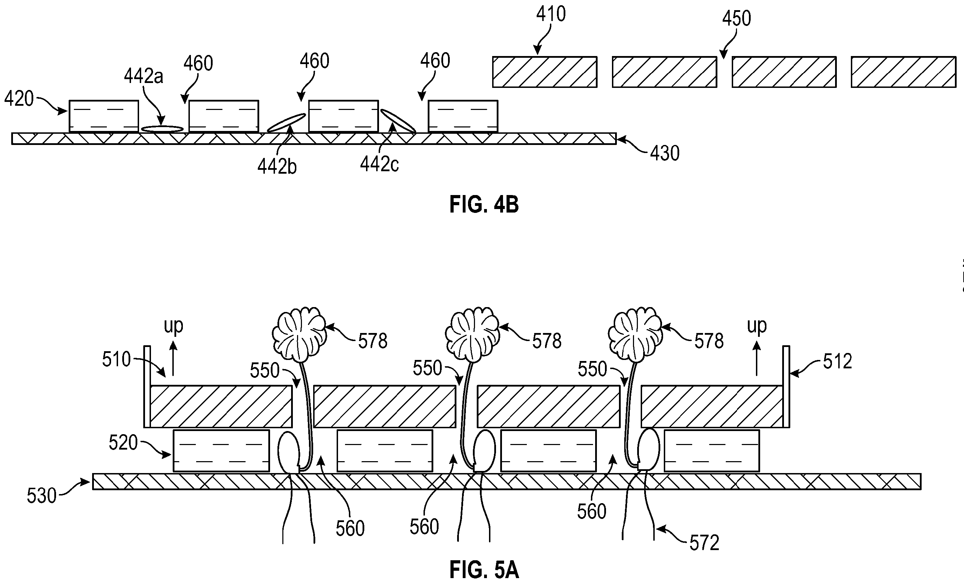

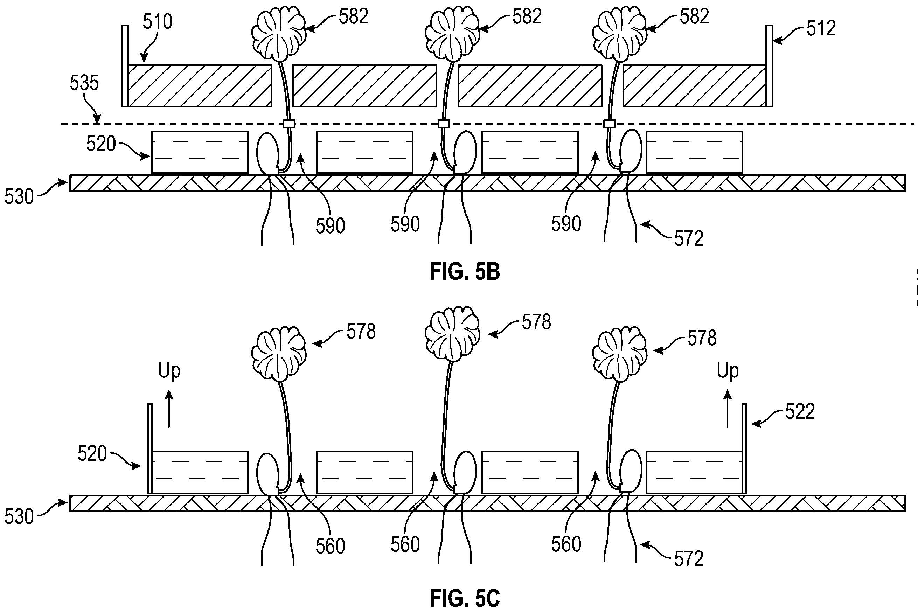

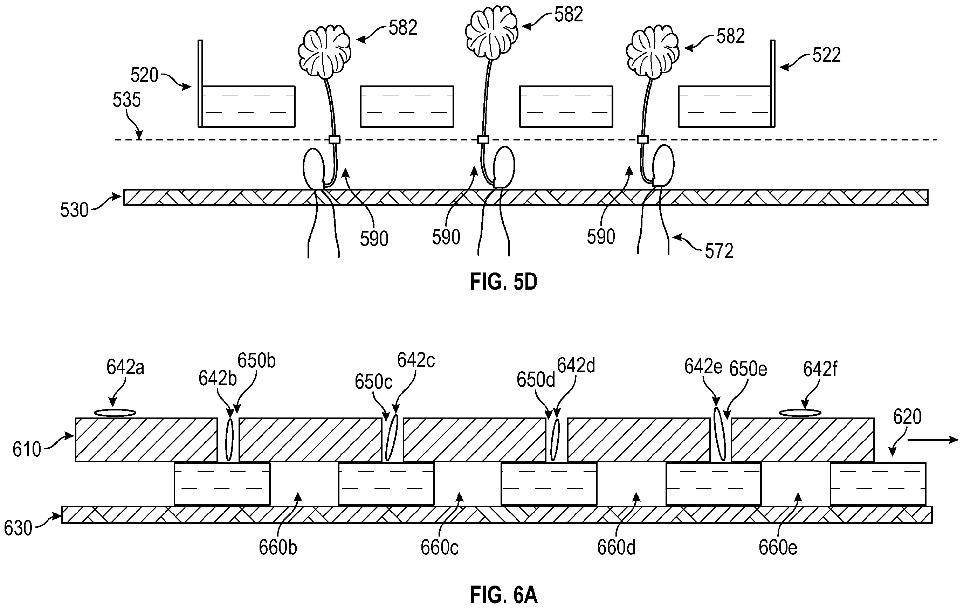

- FIG. 5A is an illustration of developing plants growing through the openings of an upper layer that can be a container and openings of a light barrier layer in an embodiment of the disclosure where the upper layer is separable from the light barrier layer. FIG. 5B is an illustration of an embodiment of the disclosure with the upper layer is separated from the light barrier layer and a cutter that has severed stems of the plants between the upper layer and the light barrier layer; the harvested plants are collected in the upper layer container. FIG. 5C is an illustration of developing plants growing through the openings of a light barrier layer in embodiments of the disclosure where the light barrier layer is separable from the soilless growth medium. FIG. 5D is an illustration of an embodiment of the disclosure with the light barrier layer separated from the soilless growth medium showing a cutter that has severed stems of the plants between the soilless growth medium and the light barrier layer.
- FIG. 6A is an illustration of an embodiment of the disclosure where seeds are positioned in the openings of the upper layer and subsequent positioning of the seeds as illustrated in FIG. 6B into openings in the light barrier layer when the upper layer openings are positioned to overlap the openings in the light barrier layer.
- FIG. 7 is an illustration of a cross section of an embodiment of the disclosure showing a support layer, soilless growth medium, and light barrier layer.
- FIG. 8 is an illustration of a cross section of an embodiment of the disclosure showing a support layer, soilless growth medium, light barrier layer, and upper layer.
- FIG. 9A is an illustration of seeds spread on the light barrier layer as described in Example 1; FIG. 9B is an illustration of seeds in a plurality or an array of openings in the light barrier layer as described in Example 1; FIG. 9C is an illustration of seeds in the array of openings in the light barrier layer of Example 1 that have germinated.

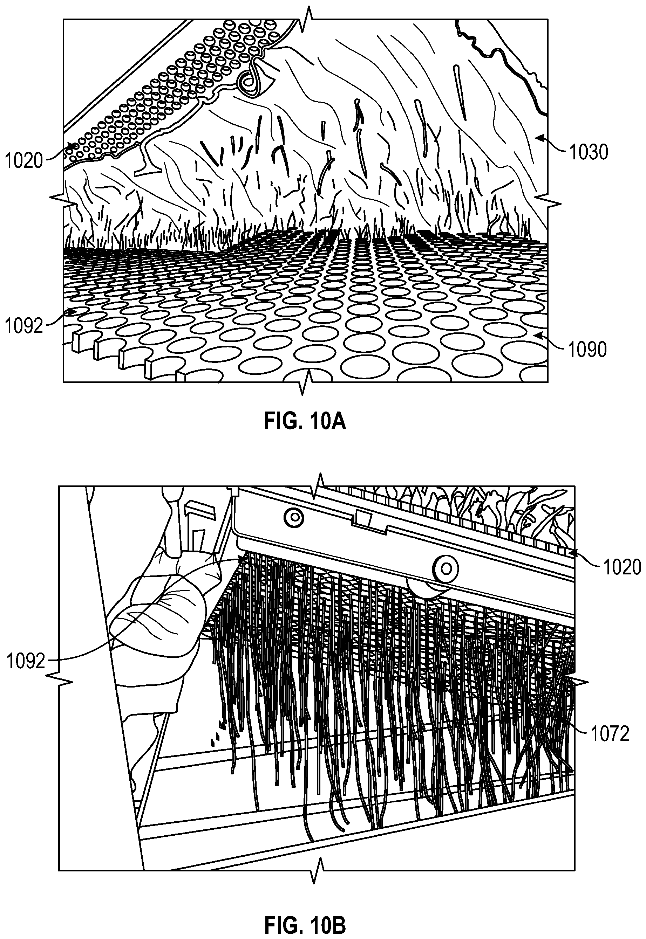

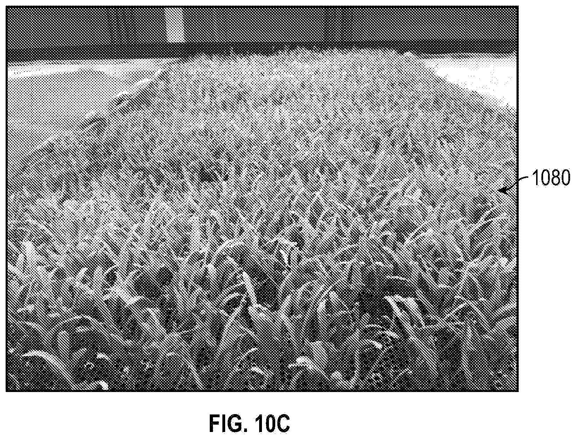

- FIG. 10A is an illustration (from top to bottom) showing the separation of the light barrier layer (top), the soilless growth medium (center), and the support layer (bottom); from seeds that have germinated as described in Example 1 that have penetrated the soilless growth medium are also shown penetrating the growth medium; FIG. 10B is an illustration of developing plants growing through openings in the light barrier layer, through the soilless growth medium, and showing the plant roots separated by the openings of the bottom support layer as described in Example 1; FIG. 10 C is an illustration of the developing plants growing up through the openings of the light barrier layer as described in Example 1.
- FIGS. 11A-11B illustrate an embodiment of the disclosure that shows cutting the stems of the developing plants that grow through the plurality of openings in the upper layer and the light barrier layer.
- FIG. 12 illustrates light incident on the developing plants and the light barrier layer.
- FIGS. 13A-13C illustrate an embodiment of the disclosure where a portion of the light interacts with the plant material and a portion of the light reflects off the growth medium.
- FIGS. 14A-14C illustrate an embodiment of the disclosure where a plant material is at least partially positioned within an opening in a growth medium and light reflects off the walls of the opening.
- FIG. 15 illustrates an embodiment of the disclosure where blue light is absorbed and re-emitted as red light and directed towards the plant material.
- FIG. 16 illustrates an embodiment of the disclosure where the upper layer has an opening smaller than the light barrier layer such that a portion of the plant is contained within the opening of the light barrier layer.
- FIG. 17 illustrates multilayer articles or flats in some embodiments of the disclosure that can be stacked together for seed germination and later separated for placement in growth chambers to develop the plants.
- FIG. 18A-18C illustrates an embodiment of the disclosure where developed plants are harvested and collected by separating the top layer of a multilayer seed germination and plant development flat from lower layers and cutting plant stems that grow through the openings in the light barrier layer.
- FIG. 19A-19C illustrates an embodiment of the disclosure where stems and roots can optionally be harvested separately from the top portion of the developed plant.

### DETAILED DESCRIPTION

In the following description, it is understood that terms such as "top," "bottom," "outward," "inward," and the like are words of convenience and are not to be construed as limiting terms. Reference will now be made in detail to embodiments of the disclosure, which are illustrated in the accompanying figures and examples. Referring to the drawings in general, it will be understood that the illustrations are for the purpose of describing particular embodiments of the disclosure and are not intended to limit the same.

Whenever a particular embodiment of the disclosure is said to comprise or consist of at least one element of a group and combinations thereof, it is understood that the embodiment may comprise or consist of any of the elements of the group, either individually or in combination with any of the other elements of that group.

These, and other, aspects of the invention will be better appreciated and understood when considered in conjunction with the following description and the accompanying drawings. The following description, while indicating various embodiments of the invention and numerous specific details thereof, is given by way of illustration and not of limitation. Many substitutions, modifications, additions or rearrangements may be made within the scope of the invention, and the invention includes all such substitutions, modifications, additions or rearrangements.

Algae growth on a soilless growth medium used in aeroponic and/or hydroponic farming may be reduced or eliminated by a multilayer flat that supports germinating seeds and developing plants that includes a soilless growth medium layer and a light barrier layer with a plurality of openings positioned atop the soilless growth medium. The light barrier layer is separable from the soilless growth medium.

The flat can further include a bottom support layer that has a plurality of openings, and the soilless growth medium can be positioned atop the bottom support. The soilless growth medium can be separated from the bottom support layer. In embodiments of the disclosure, the barrier layer can be position together with the bottom support to sandwich the growth medium layer between them.

Algae growth on a soilless growth media used in aeroponic and/or hydroponic farming may be reduced or eliminated by a multilayer article or flat that supports germinating seeds and developing plants that includes a bottom support layer that has a plurality of openings and is separable from soilless growth medium atop the support. Over the top surfaces of the soilless growth medium is a light barrier layer with a plurality of openings in the solid surface of the light barrier and regions of the light barrier layer that are solid and without openings. The light barrier layer is separable from the growth medium and together with the bottom support sandwich the growth medium between them.

An upper layer with a plurality of openings can be placed on top of the light barrier layer in some embodiments of the disclosure. The upper layer has a plurality of openings in the solid surface of the upper layer. The upper layer is freely separable from the light barrier layer below it and the openings in the two layers can at least partially overlap.

Seeds can be positioned into the plurality of openings in the light barrier layer and contact the growth medium below the light barrier layer. Preferably only a single seed occupies any opening in the light barrier layer and the seed is retained in the opening by the walls of the light barrier opening and surface of the soilless growth medium without an adhesive.

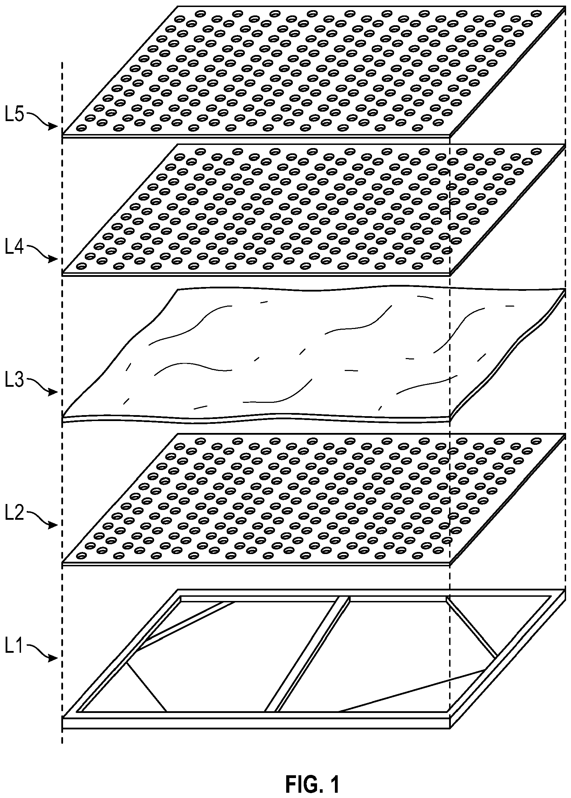

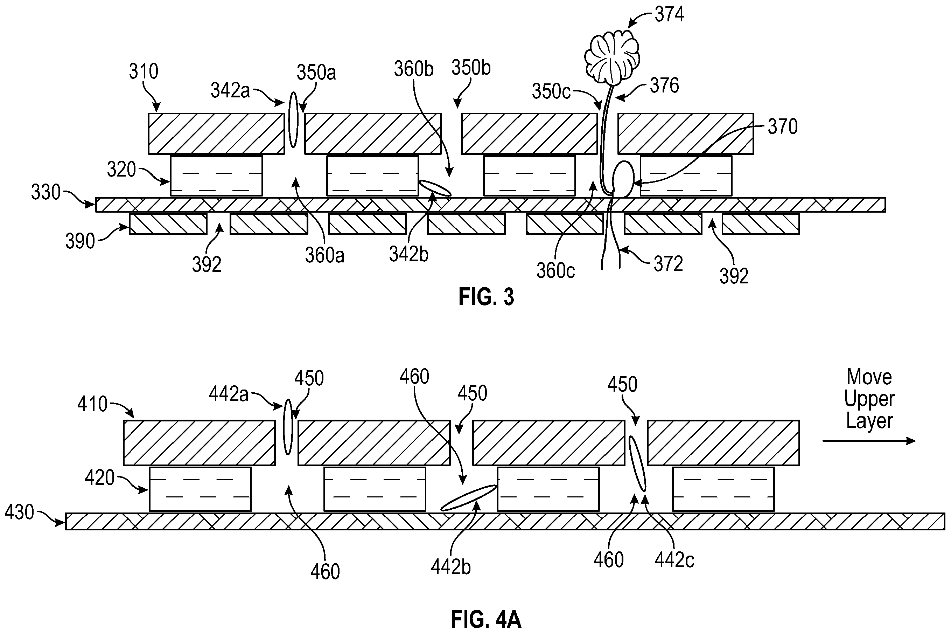

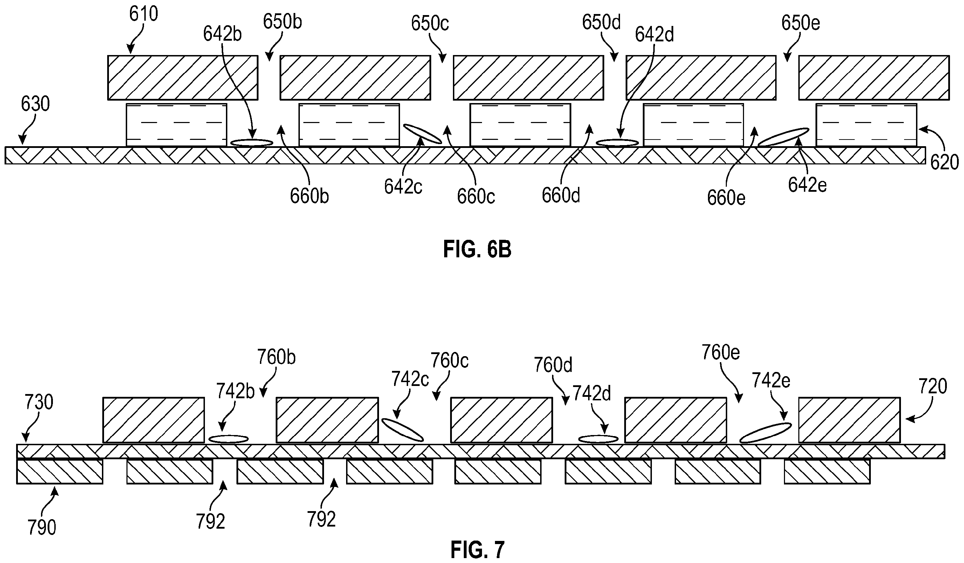

FIG. 1 is an illustration of an embodiment of the disclosure that includes several layers. From bottom to top in FIG. 1, the first layer (L1) is an optional frame that can be used to support one or more overlying layers (L2-L5, or more). (L2) is a bottom support layer that has one or more, or a plurality, of openings. The bottom support layer (L2) can accommodate one or more root masses from the overlying plants. The openings in the bottom support layer can allow mist or fog from the sprayers that may be located below the support to reach the growth medium. The unopened portions of the bottom support can block all or a portion of light incident on the flat from reaching surfaces below the bottom support. These surfaces below the bottom support can include drip pans and nozzles or nutrient containers (not shown). (L3) is a soilless growth medium that can be positioned atop the bottom support layer (L2) and that is freely separable from and not fixed to the bottom support layer (L2). The soilless growth medium (L3) supports seed germination, penetration of roots from developing plants through the medium, and also prevents the direct passage of nutrient mist or fog droplets through the medium. A light barrier layer (L4) has a plurality of openings and has un-opened portions. The un-opened or solid portions of the light barrier layer (L4) have a light transmittance, measured by intensity, that is less than, and in some embodiments at least 50% less than, the amount of the light transmittance through any opening in the light barrier layer. The light barrier layer (L4) is freely separable from and positioned atop the soilless growth medium. The openings in (L4) can be between 20% and 70% of the area of the light barrier layer. An optional upper layer (L5) can be used that is freely separable from the light barrier layer (L4), has a plurality of openings, and is positioned over the light barrier layer. The openings in the upper layer (L5) overlap a portion or all of the area of the openings in the light barrier layer, the overlap of the openings between the two layers being sufficient for light to reach the soilless growth medium (L3) and/or germinating seeds, or to develop plants on the growth medium (L3) through the openings. (L5) and (L4) can be separated from each other and a cutter passed between them to sever the stems and harvest developed plants. In some embodiments one or more of the light barrier layer, the upper layer, or the light barrier layer and upper layer can include a fluorescent material or a phosphor material. In some embodiments the first layer (L1) and bottom support layer (L2) can be combined or integrated into a single layer as illustrated in FIG. 3 or FIG. 7.

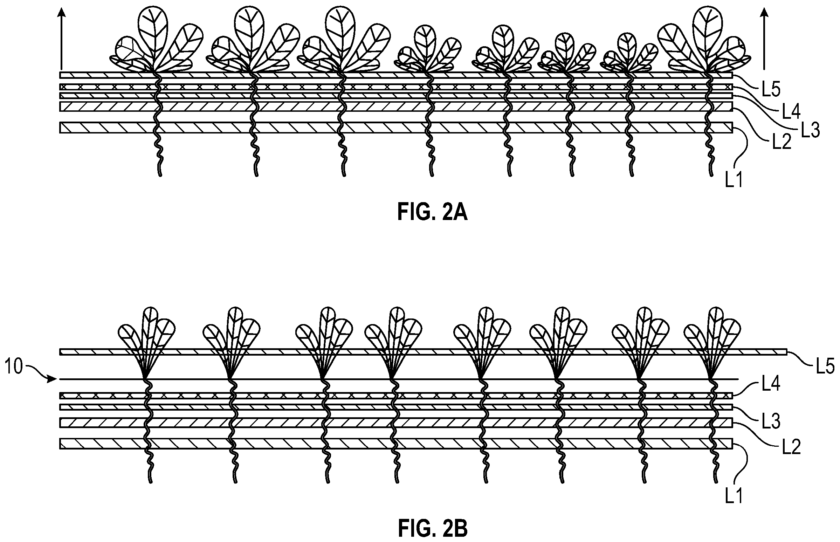

FIG. 2A illustrates an embodiment of the disclosure where a number of plants are shown with roots growing through (L3), (L4), and (L5). The upper layer (L5) can be self-supporting in some embodiments. In FIG 2B, light barrier layer (L4) and upper layer (L5) are shown being separated from one another a sufficient distance amount so that a cutter 10, can be passed between (L4) and (L5) to sever the plant stems that grow through the openings in the light barrier layer. A self supporting upper layer can be advantageous where developing plants have protruded through the overlapping light barrier layer (L4) and upper layer (L5) openings. In some embodiments stiffening braces can be added to the edges of the upper layer for added support.

FIG. 3 is an illustration of a side view of an embodiment of the disclosure with a support layer (390) with openings (392). Positioned above support layer (390) may be at least one of a soilless growth medium layer (330), a light barrier layer (320), and an upper layer (310). The openings (350a,b,c, etc.) in the upper layer (310) can be substantially the same size and can be smaller than the openings (360a,b,c, etc.) in the light barrier layer below. It should be understood that although depicted as three openings (350a,b,c and 360a,b,c) additional openings are anticipated. The light barrier layer (320) is located below the upper layer and the openings in the two layers at least partially overlap. In FIG. 3, the light barrier layer (320) is atop of the soilless growth medium (330). Openings (360a,b,c) in the light barrier layer may have a shape to hold a plurality of seeds, a plurality of developing plants from germinated seeds, and a combination thereof. For example, openings (360a,b,c) in the light barrier layer are adapted to hold a seed (342a and 342b) or a developing plant from a germinated seed (370) with roots (372), stem (376), and leaves (374).

In embodiments of the disclosure, the number of the plurality of openings in layers such as the bottom support layer, the light barrier layer, and the upper layer can range from about 1 per square centimeter to about 10 per square centimeter. In other embodiments, the number of openings in layers such as the support layer, the light barrier layer, and the upper layer can range from about 2 per square centimeter to about 6 per square centimeter. Each layer can have the same or a different number of openings, and the sizes and shapes of the openings can be the same or different. Advantageously, the openings in the bottom support layer may also permit directed passage of air through the support layer, through the growth medium 330, and through openings in the overlying light barrier layer 320 and upper layer 310. The number of openings in the layers may be adapted for various plant densities, plant varieties, and/or plant sizes. The plurality of openings can be arranged randomly or in various patterns such as but not limited to a 1 dimensional linear array, openings configured in an arc, a staggered pattern, various two dimensional patterns or arrays. Other arrangements of the plurality of openings are in the layers are possible including ornamental designs and patterns.

In some embodiments of the disclosure the size of the openings through the thickness of the light barrier layer and/or the upper layer are characterized as being substantially the same size as the seed which refers to an opening through a layer that allows one seed at a time to occupy the opening and move freely through the opening in the layer to the surface of the growth medium. For example, as illustrated in FIG. 3, seed 342a occupies the opening 350a and seed 342a can freely pass through the opening 350a in the upper layer 310 and into opening 360a in light barrier layer 320. Seed 342b is shown as having freely moved through opening 350b and is shown positioned on the growth medium 330 in light barrier layer opening 360b which is larger than the size of seed 342b; opening 360b can accommodate germination of seed 342b.

In some embodiments of the disclosure the size of the openings through the thickness of the light barrier layer are characterized as being substantially the same size as the germinated seed or has a size that is able to accommodate a germinated seed. FIG. 3 illustrates an opening 360c, which is similar in size to openings 360a, and 360b, that can accommodate germinated seed 370.

FIGS. 4A and 4B (optional bottom support layers omitted) illustrate an embodiment of the disclosure with an upper layer (410) slideably positioned atop a light barrier layer (420). The light barrier position atop the growth medium (430) shows that the openings (450) in the upper layer are smaller than the openings (460) in the light barrier layer below. A portion of the openings (450, 460) in the two layers may overlap. In FIG. 4A, seeds are illustrated as initially being positioned in the upper layer openings (450) and subsequently being positioned in the light barrier layer openings (460) and contact the soilless growth medium (430). Seeds may fall through upper layer openings (450) into light barrier layer opening (460) or seeds may be placed through upper layer openings (450) into light barrier layer opening (460). Upper layer (410) can be moved and reused to seed another light barrier layer, as depicted in FIG. 4B.

FIG. 5A is an illustration of developing plants (578) in and growing through the openings (550) of the upper layer (510) and the openings (560) in light barrier layer (520) in embodiments of the disclosure where the upper layer is separable from the light barrier layer (bottom support layer is optional and not shown for clarity). Each opening (560) illustrates a developed plant from a germinated seed that has roots (572) penetrating the soilless growth medium (530) and growing through the openings (560) in the light barrier layer (520). The developed plant can also grow through the openings (550) in the upper layer. Upper layer (510) can be separated from, in some embodiments lifted up, and moved away from light barrier layer (520) once the plants have reached a desired height. FIG. 5B (bottom support layer is optional and omitted for clarity) shows the upper layer (510) separated from the light barrier layer (520) and a cutter (535) between the upper layer and light barrier layer that has cut or severed stems of the plants in a region of the stems (590) between the upper layer and the light barrier layer. The upper layer (510) and cut plants (582) can be moved and the cut plants subsequently packaged.

In some embodiments of the disclosure the light barrier layer or the upper layer with a plurality of openings for plants to growth through can optionally be a container or a material that can be formed into a container. For example, in FIG. 5A and FIG. 5B, the upper layer (510) can be a container or basket that includes sidewalls (512), or the upper layer (510) can be a material that can be folded into a pouch with sidewalls (512). The upper layer (510) with optional sidewalls (512) can be used to collect plants that have been cut (582) as illustrated in FIG. 5B. The light barrier layer or upper layer container or material can be separated from any of the underlying layers prior to, or during, cutting of the plant stems. FIG. 5C is an illustration of developing plants (578) in, and growing through, the openings (560) in light barrier layer (520) in embodiments of the disclosure where the light barrier layer (520) can optionally be a container or a material that can be formed into a container. For example, in FIG. 5C, the light barrier layer (520) can be a container or basket that includes sidewalls (522), or the light barrier layer (520) can be a material that can be configured or folded into a pouch with sidewalls (522). The light barrier layer (520) with optional sidewalls (522) is separable from the soilless growth medium (530). Each opening (560) in the light barrier layer (520) illustrates a developed plant from a germinated seed that has roots (572) penetrating the soilless growth medium (530) and a stem portion growing through the openings (560) in the light barrier layer (520). Light barrier layer (520) can be separated from, in some embodiments lifted up, and moved away from the soilless growth medium (530) once the plants have reached a desired height for harvesting. FIG. 5D shows the light barrier layer (520), with optional sidewalls (522), separated from the soilless growth medium (530) and depicts a cutter (535) that passes between the soilless growth medium and the light barrier layer. The cutter (535) severs or cuts the stems of the plants in a region of the stems (590) between the soilless growth medium and the light barrier layer. The light barrier layer (520) with sidewalls(522) to contain the cut plants (582) can be moved and the cut plants subsequently packaged.

A light barrier layer or an upper layer that can be a container and used to collect substantially all of the harvested plants in a batch from a flat in embodiments of the disclosure is advantageous for tracing the plants back to a particular flat or growth chamber location in a farm. A light barrier layer or an upper layer of a flat that can be used to collect harvested plants and that can facilitate stacking and germination of multiple flats in embodiments of the disclosure as described herein below can further reduce the need and cost for separate germination carts for the flats.

In some embodiments of the disclosure an article that cuts or severs the plant stems growing through the openings in the light barrier layer can be used to harvest developed plants. The article can be a cutter such as but not limited to a blade, a wire or serrated wire, a band saw, or other machining technology such as a waterjet.

Embodiments of the disclosure include a method of harvesting plants using the multilayer articles or flats as described herein. In some embodiments the flats include a soilless growth medium and a light barrier layer with openings, the light barrier layer is positioned atop the growth medium and plant stems from developing plants grow through a plurality of the openings in the light barrier layer. In other embodiments, the flat can include a growth medium, a light barrier layer, and an upper layer atop the light barrier layer, a bottom support layer below the soilless growth medium, or both an upper layer and a bottom support layer with plant stems from developing plants growing through the plurality of openings in the light barrier layer. The method includes the act or step of cutting the plant stems that grow through the plurality of openings in the light barrier layer. In some embodiments the method includes the act or step of cutting the plant stems that grow through the plurality of openings in the light barrier layer between the upper layer and the light barrier layer. The method can include moving the openings of the light barrier layer or the upper layer relative to the soilless growth medium. In some embodiments the openings of the upper layer are moved relative to the openings of the light barrier layer. In some embodiments the act or step of moving includes any one of separating the upper layer and the light barrier layer; sliding the upper layer; sliding the light barrier; or sliding both layers. In some embodiments, sliding the upper layer and/or the light barrier layer can be used to cut the plant stems.

In some embodiments moving the openings of the upper layer relative to the light barrier layer includes separating the upper layer from the light barrier with the stems in the openings of the upper layer and the light barrier layer. In some embodiments an article that cuts plant stems is passed between the upper layer and light barrier layer. The article that cuts the plant stems between the upper layer and light barrier layer can be a blade, saw blade, or a wire.

Embodiments of the disclosure to harvest plants growing through openings in the light barrier layer can include moving the openings of one or more layers such as the light barrier layer and/or upper layer relative to the soilless growth medium. In some embodiments moving may include separating the one or more layers by a distance from the soilless growth medium. For example, as illustrated in FIG. 5C and FIG. 5D, the light barrier layer (520) can be moved upward away from the soilless growth medium (530) by a distance that allows a cutter (535) to move between the light barrier layer and the soilless growth medium to sever or cut the plant stems. In other embodiments as illustrated in FIG. 5A and FIG. 5B, the upper layer (510) can be separated from the light barrier (520) by a distance that provides clearance for a cutter (535) to pass between the light barrier layer and the upper layer. Advantageously, separating the one or more layers allows the length of the stems of the harvested plants to be tailored and selected which can increase the value and appearance of the harvested product to the end user. Separating the one or more layers of the flat and harvesting the developed plants also provides a high harvest yield because substantially all stems of the plants (greater than 90%) growing through the openings of the light barrier layer are severed by the cutter.

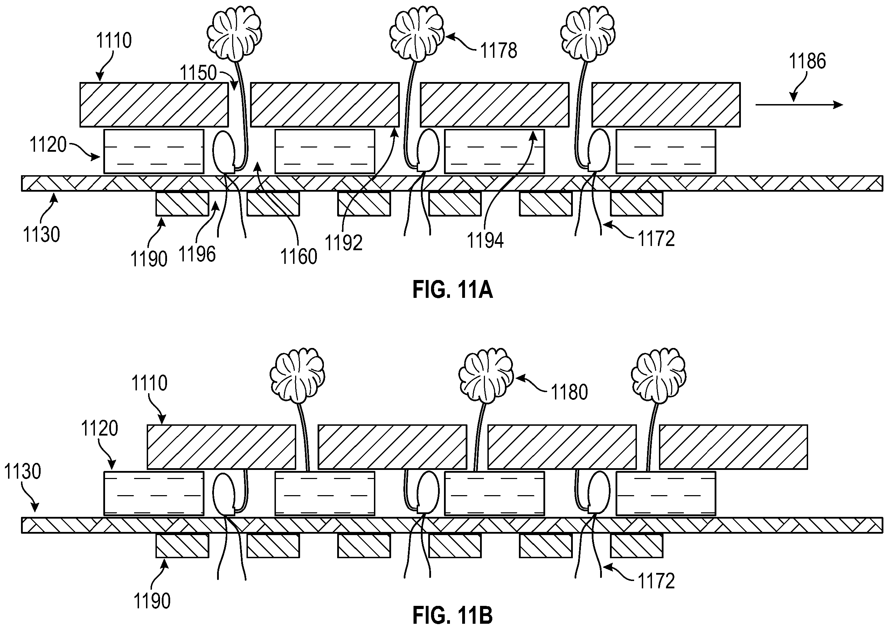

In other embodiments of the disclosure to harvest plants growing through openings in the light barrier layer, the act or step of moving of the one or more layers relative to the soilless growth medium can include sliding or translating (1186) horizontally one or more of the light barrier layer and/or upper layer relative to the soilless growth medium. For example, the sliding or translating (1186) horizontally of the upper layer openings (1150) relative to the soilless growth medium (1130) and openings (1160) in the light barrier layer can sever or cut the stems of the plants growing through the openings as illustrated in FIG. 11A and FIG. 11B. In another example the light barrier layer and the upper layer may be separated from the soilless growth medium by a pre-determined distance in a first act or step and then the upper layer openings are slid relative to the light barrier openings to cut the plants at a pre-determined height in a second act or step. Advantageously, harvesting plants in this way provides high harvest yield where substantially all plant stems growing through the light barrier layer (greater than 90%) are severed, and the method and article eliminates the need for a separate harvester and the costs associated with the purchase and operation of a harvester. Optionally the upper layer (1110) in FIG. 11A and FIG. 11B can be configured as a container (not shown) to collect the cut plants.

The bottom support layer (L2) can be in the form of a sheet, plate, or film and can be made of metals, polymers, ceramics, or composite materials. In some embodiments the bottom layer can also be a metal screen, a metal mesh, a plastic mesh, or a composite mesh. The support layer (L2) can be placed on top of a frame (L1) or may be used in place of the frame (L1) to support the soilless growth medium (L3). For example, as illustrated in FIG. 3, the bottom support layer (390) can be a screen (e.g., metal) that supports the soilless growth medium (330) and other layers above it, or as in FIG. 7, the support layer (790) can be a screen (e.g., metal) that supports the growth medium (730) and a fluorescent containing material light barrier layer (720) with openings (760). The bottom support layer has a plurality of openings through a thickness of the support layer which are separated by solid portions of the support layer. The openings through the bottom support accommodate one or more root masses. The openings can have any geometric shape and can include combination of shapes. Some openings can have a tapered shape or asymmetric shape that, for example, varies in dimension from one surface to another (e.g., a cone or a pyramid). The percent area of the bottom support that include the openings can be from 20% to 90% of the support layer area. The bottom support layer that include the openings can range from 20% to 90% of the bottom support layer area. The size of the openings can range from about 0.1 centimeters to about 5 centimeters in a largest aspect of the opening, such as the major axis of an ellipse, the diagonal of a rectangle, or the diameter of a circle. In some embodiments the size of the openings in the bottom support can range from about 0.1 centimeters to about 1.5 centimeter in diameter. In some embodiments the openings in the bottom support layer can have a center to center spacing of between about 0.5 centimeters to about 5 centimeters. The openings in the bottom support layer may or may not overlap with any portion of the openings in other layers. Un-opened portions of the support layer may reduce the amount of nutrient solution that contacts the bottom surface of the growth medium and may also reduce or block the amount of light from reaching nutrient drip pans and nozzles positioned below the support layer in an aeroponic growth system, or may also block light from reaching a nutrient container in a hydroponic growth system.

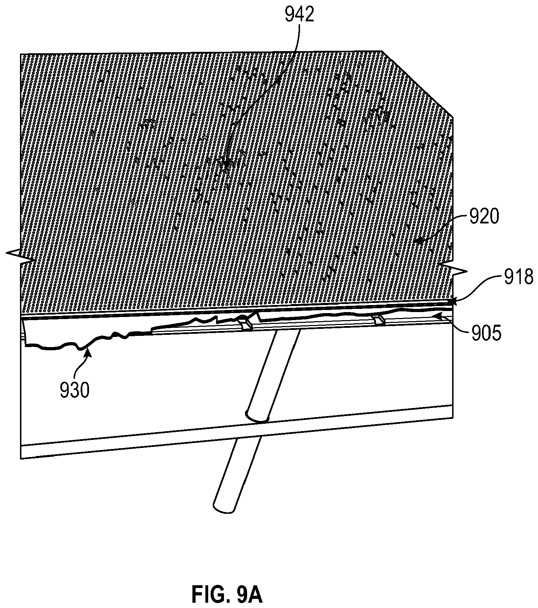

The design of the bottom support layer, for example the support thickness, the geometry and spacing of the open and solid portions of the support, can be chosen such that the soilless growth medium that covers the openings of the support remain substantially integral during seed germination and plant development. An integral soilless growth medium can prevent direct light penetration through openings in the medium or at edges of the flat. In some embodiments of the disclosure, the edge portions of the bottom support layer can be made solid and without openings, see for example solid boarder or edge (918) in FIG. 9A, to prevent direct light penetration, retain the soilless growth medium, and provide structural rigidity to the layer. The sandwiching of the soilless growth medium between adjacent layers advantageously supports the soilless growth medium over the openings in the layers and can eliminate the need to stretch and secure the growth medium at the edges of a frame compared to traditional cloth soilless growth media and frame flats. Embodiments of the disclosure also reduce labor costs for securing frame mounting fixtures to the periphery of the soilless growth media, mounting the soilless media by the fixtures to frames, and enables the use of a wider variety of soilless growth media in hydroponic and aeroponic farming.

After removal of layers from atop the soilless growth medium after plant cutting and harvesting, the used soilless growth medium can be freely separated from the underlying support layer without the need to loosen fasteners. In embodiments where the soilless growth medium is biodegradable or compostable, the soilless growth medium can be removed with plant debris from the bottom support and sent to a composting facility.

The soilless growth medium (L3) may be a textile material that supports seed germination and root penetration of developing plants therethrough. In some embodiments the textile can be a cloth or other fabric. The fabric may include but are not limited to fibers containing cellulose, polyester, cotton, burlap, rayon, wool, silk, hemp, blends of these, and combinations of these with other fibers. Other soilless growth media textiles may include materials such as but not limited to paper, cardboard and a combination thereof. In some embodiments the soilless growth medium may include organic fibrous materials like coconut fiber. In some embodiments the soilless growth medium may be a biodegradable material or the soilless growth medium may be a compostable material that supports germination and plant development and that can be pulped or otherwise physically torn after use along with other plant parts from the flat following harvesting. In some embodiments, the growth medium is free of peat, moss, soil, or any combinations thereof. The soilless growth medium may inhibit the passage of nutrient mist droplets therethrough. The soilless growth medium provides a torturous path for the droplet spray from aeroponic nozzles and foggers located below the support layer, but the soilless growth medium can be breathable and permeable to a flow of gases. The soilless growth medium may be positioned atop the bottom support layer and is not glued to the bottom support layer when the multilayer article is assembled which is advantageous for composting. The entanglement of roots passing through the soilless growth medium and the openings in the bottom support do not affix the growth medium to the bottom support layer which is advantageous for cleaning and reuse of the bottom support. The thickness of the soilless growth medium as measured between the support layer and the light barrier layer can be less than 2 centimeters. In some embodiments, the thickness of the soilless growth medium, as measured between the support layer and the light barrier layer, can be between 0.05 centimeters and 0.5 centimeters. In embodiments of the disclosure, the size and shape of unstretched soilless growth medium can cover open portions of the bottom support.

The light barrier layer (L4) can be in the form of a sheet, plate, or film and can be fabricated from metals, polymers, ceramics, composite materials and any combination thereof. In some embodiments the light barrier layer can include a fluorescent material or phosphor that converts a portion or all of the light that is incident on surfaces of the light barrier layer, for example surfaces that are not those of the plants, to a longer wavelength light of which a portion can be directed to the germinating seeds and/or developing plants on the growth medium.

The light barrier layer may be placed on top of the soilless growth medium (L3). The light barrier layer has a plurality of openings through the thickness of the light barrier layer and which are separated by solid portions of the light barrier layer. In some embodiments the edge portions of the light barrier layer are solid which prevents direct light penetration and provides structural rigidity to the layer. The openings through the light barrier layer can have any geometric shape and can include any combination of shapes. Some openings can have a tapered shape or asymmetric shape that, for example, varies in dimension from one surface to another (e.g., a cone or a pyramid). The percent area of the light barrier layer that include the openings can range from 20% to 90% of the light barrier layer area. The size of the openings can range from about 0.025 centimeters to about 2.5 centimeters in a largest aspect of the opening, such as the major axis of an ellipse, the diagonal of a rectangle, or the diameter of a circle. In some embodiments the openings in the light barrier layer can have a center to center spacing of between about 0.5 centimeters to about 5 centimeters. In some embodiments the openings in the light barrier layer can have a center to center spacing of between about 0.75 centimeters to about 1.5 centimeters. In some embodiments the size of the openings can range from about 0.25 millimeters to about 2.5 millimeters in a largest aspect of the opening, such as the major axis of an ellipse, the diagonal of a rectangle, or the diameter of a circle. In some embodiments of the disclosure, the size of the openings can accommodate three or fewer seeds. In other embodiments of the disclosure, the openings in the light barrier layer are sized to accommodate one seed in each opening. In some embodiments of the disclosure the light barrier layer solid portions can have a light transmittance, measured by intensity, that is less than the amount of the light transmittance through an opening in the light barrier layer. In other embodiments of the disclosure, the light barrier layer solid portions can have a light transmittance, measured by intensity, that is less than, and in some embodiments 50% or less, than the amount of the light transmittance through an opening in the light barrier layer. Less light transmittance through the light barrier layer reduces the amount of light that can reach the soilless growth medium and other wet surfaces to support algae growth. The light barrier layer is separable from and atop the soilless growth medium. The light barrier layer is absent any adhesive or other fixturing with surfaces of the soilless growth medium. The seed or seeds in any opening of the light barrier layer are retained in the opening by the walls of the opening and the soilless growth medium top surface; the seed(s) are not glued or tacked to the soilless growth medium. The seed(s) are not sandwiched between surfaces of the growth medium and solid portions of the light barrier layer.

The light barrier layer with a pattern of holes or openings can create an even distribution of seeds and therefore plants on the growth medium. Seeds will stay in their position even when the tray moves, shakes, or tilts. The pattern of openings in the light barrier layer can also be used to distribute the light evenly between the plants, help distribute the root masses, and eliminates the problem of low spots on the soilless growth media without having to stretch the media over frames.

Some embodiments of the disclosure, for example the articles as illustrated in FIG. 1 and FIG. 3, can further include an upper layer (L5, 310) that is separable from and positioned on top of the light barrier layer (L4, 320). Upper layer (L5, 310) and the light barrier layer (L4, 320) can move relative to one another when they are separated or when they are in sliding contact with each other (see FIG. 11A and 11B). The upper layer may have a plurality of openings through the thickness of the upper layer and which are separated by solid portions of the upper layer. The upper layer (L5) can be in the form of a sheet, plate, or film and can be fabricated from metals, polymers, ceramics, composite materials and any combination thereof. In some embodiments the edge portions of the upper layer are solid which prevents direct light penetration and provides structural rigidity to the layer. The openings through the upper layer can have any geometric shape and can include a combination of shapes. Some openings can have a tapered shape or asymmetric shape that, for example, varies in dimension from one surface to another (e.g., as a cone or a pyramid). The percent area of the upper layer that includes the openings can range from 20% to 90% of the upper layer area. The size of the openings can range from about 0.025 centimeters to about 2.5 centimeters in a largest aspect of the opening, such as the major axis of an ellipse, the diagonal of a rectangle, or the diameter of a circle. In some embodiments the size of the openings of the upper layer can range from about 0.25 millimeters to about 2.5 millimeters in a largest aspect of the opening, such as the major axis of an ellipse, the diagonal of a rectangle, or the diameter of a circle. In some embodiments the openings in the upper layer can have a center to center spacing of between about 0.5 centimeters to about 5 centimeters. In some embodiments the openings in the upper layer can have a center to center spacing of between about 0.75 centimeters to about 1.5 centimeters. In some embodiments the upper layer can include a fluorescent material or a phosphor material that converts a portion or all of the light that is incident on surfaces of the upper layer, for example surfaces that are not those of the plants, to a longer wavelength light of which a portion can be directed to the germinating seeds and/or developing plants on the growth medium. In other embodiments the upper layer can be transparent to light and transmit a portion of the incident light to the light barrier layer which can include a fluorescent material.

In some embodiments of the disclosure, the openings in the upper layer can be sized to accommodate one seed in each opening. When the upper layer is part of an article that is installed in an aeroponic or hydroponic growth system, as shown in FIG. 1, the openings in the upper layer overlap at least a portion of the openings in the light barrier layer so that light can reach the soilless growth medium and/or germinating seeds in the openings, and the openings provide room for the developing plants to grow through. In embodiments of the disclosure, as illustrated in FIG. 6A and FIG. 6B (bottom support layer omitted), the upper layer (610) can be used to seed the openings (660b, 660c, 660d, 660e) in the light barrier layer. The openings (650b, 650c, 650d, 650e) in the upper layer and light barrier layer can be offset and initially positioned as illustrated in FIG. 6A such that there is no overlap between the openings in the two layers. Seeds can be spread on (610) and positioned in the openings (650b, 650c, 650d, 650e) of the upper layer. Seeds not positioned within an opening, such as (642a) and (642f), can be removed from upper layer (610) by wiping or clearing the upper layer (610). The upper layer (610) and light barrier layer (620) may then be moved relative to each other such that upper layer openings (650b, 650c, 650d, 650e) and light barrier openings (660b, 660c, 660d, 660e) at least partially align such that seeds (642b,c,d,e) drop and position within the light barrier layer openings (660b, 660c, 660d, 660e). As depicted in FIG. 6A, seed (642b) in upper layer opening (650b) can be positioned as shown in FIG. 6B within light barrier layer opening (660b) when the openings in upper layer (610) are at least partially aligned with the openings in light barrier layer (620). At least partial alignment of the openings in (610) and (620) similarly results in other seed engagements, as described in relation to seed 642b. For example, but not limited to, seed (642c) in upper layer opening (650c) being positioned as shown in light barrier layer opening (660c); seed (642d) in upper layer opening (650d) being positioned as shown in light barrier layer opening (660d); seed (642e) in upper layer opening (650e) being positioned as shown in light barrier layer opening (660e); and so on. The upper layer may be kept in place when the unit or article is installed in a growth system, or the upper layer can be removed and used to seed another light barrier layer.

In some embodiments, the upper layer includes openings that are substantially the same size, both in diameter and height, as a majority of the seeds being spread such that only a single seed is positioned in each upper layer opening. An advantage of having smaller openings in the upper layer relative to the openings in the light barrier layer is the ability to use the upper layer to deposit a single seed into a larger light barrier layer opening that is substantially the same size as the germinated seed. Further, when the developing plant grows through the upper layer opening from the light barrier layer opening, the upper layer can be separated from the barrier layer and a cutter passed between the them to sever the plant stems.

In embodiments of the disclosure the surfaces and edges of the openings in any of the bottom layer, the light barrier layer, the upper layer, or additional layers not including the soilless growth medium, can on one or both sides of the layer be substantially flush or flat with the surfaces adjacent to the openings in overlying or underlying layers as illustrated in FIG. 3 and FIG. 6B. These layer surfaces can be substantially flat with few or no undulations, crevices, and the like between adjacent layers that would permit a seed to become positioned, lodged, or trapped between solid portions of the light barrier layer (320) and soilless growth medium (330) away from the edge of the openings (360a,b,c). The flat or flush layer surfaces and openings allow adjacent layer surfaces to be translated or slid across each other smoothly and this feature can be utilized to cut plant stems without snagging or catching edges of the openings and creating undesirable particles in the harvested product. Cutting tools can also be passed between the smooth layers with reduced risk of contacting layer surfaces. Having flat or flush openings also minimizes the cost of reconditioning layer surfaces that have been damaged by snagging or gouging. The close proximity, which may include physical contact and/or compression, of the light barrier layer bottom surface or opening edge surfaces with the soilless growth medium layer top surface forms a physical barrier or seal that prevents seeds from becoming positioned or trapped between these layers away from the edge of the openings during use of the flat. The proximity of the light barrier layer bottom surface or opening edges with the top surface of the soilless growth medium can include separation by less than the thickness or diameter of the seeds being used, physical contact between the light barrier layer and soilless growth medium, compression of the soilless growth medium by the light barrier layer, or any combination of these. Reducing or eliminating seeds becoming positioned or trapped between the soilless growth medium and solid portions of the light barrier layer is advantageous because it can reduce or substantially eliminate algae growth on the soilless growth medium caused by this condition and reduces costs of wasted seeds.

In some embodiments of the disclosure, the thickness of each of the bottom support layer, the light barrier layer, and upper layer can be less than 2 centimeters. In some embodiments, the thickness of any of these layers, as measured between their bottom surface and their top surface, can be between 0.05 centimeters and 1 centimeters. In embodiments of the disclosure for harvesting plants with plant stems from developing plants growing through the plurality of openings in the light barrier layer, any of the bottom support layer (L2), the light barrier layer (L4), or the upper layer (L5) can be fabricated from materials that are sufficiently hard and dense to hold a cutting edge after repeated use to cut the stems and/or to resist abrasion from cutters that cut the stems. Examples of such as materials include metals, ceramics, polymers, and composites. Holding cutting edges on the various layers reduces operational costs because surfaces do not need to be reconditioned which results in downtime and increased labor costs. Surfaces of the various layers that resist abrasion prevent small particles from impacting product quality.

FIG. 11A illustrates an embodiment of the disclosure where the edges of openings in various layers (e.g., adjacent layers) can be used to cut the developed plants. FIG. 11A shows developing plants (1178) growing through the openings (1150) of the upper layer (1110) and openings (1160) in light barrier layer (1120). Upper layer openings (1150) have an edge (1192) and light barrier layer openings also have an edge (1194). The upper layer (1110) is slideably positioned and separable from the light barrier layer (1120). The soilless growth medium (1130) is positioned above a bottom support layer (1190) and below the light barrier layer (1120). Each opening (1160) illustrates a developed plant from a germinated seed that has roots (1172) penetrating the soilless growth medium (1130) and openings (1196) in the bottom support (1190). The position of the upper layer opening bottom edges (1192), with respect to the light barrier opening top edges (1194), may be altered (1186) by moving or sliding one or more of the layers. The movement of the layers may occur once the developing plants (1178) have reached a desired height to cut the stems of the plants. The change in position of the upper layer opening bottom edges (1192) with respect to the light barrier opening top edges (1194) can be achieved by the act or step of moving or sliding the upper layer, moving or sliding the light barrier layer, moving or sliding both the upper layer and the light barrier layer so that the edges (1192) and (1194) cut or sever the plant stems. For example, FIG. 11B illustrates the upper layer (1110) after being moved relative to the light barrier layer (1120) whereby the upper layer opening bottom edges (1192) and light barrier layer top edges (1194) cut or severe the stems of the plants between the upper layer and the light barrier layer. The upper layer and cut plants (1180) can be moved and the plants subsequently packaged. Openings (1150) in the upper layer can be the same size or smaller than the openings in the light barrier layer (1160).

Embodiments of the disclosure can advantageously be used to position one or more seeds into the plurality of the openings in a light barrier layer. In some embodiments, the openings are sized to accommodate a plurality of seeds in contact with the growth medium, for example, two seeds, three seeds, four seeds or more. This plurality may be standardized to a particular value or distribution, for example, but not limited to, all openings accommodate 3 seed or accommodate 3-4 seeds. Embodiments of the disclosure can include seeds positioned in each of a plurality of openings in a layer. Some embodiments can consist of a single seed in contact with the growth medium and positioned within each opening containing a seed. Additional embodiments may include a single seed positioned in each opening, with some small nominal number (e.g., less than 10%) of openings containing more than one seed. In some embodiments, for example as illustrated in FIG. 6A and FIG. 6B, the openings in the upper layer can be sized to accommodate a single seed in each opening and may be paired with a light barrier layer with openings that can accommodate a germinating seed in contact with the growth medium. Depending on the size of the plants being grown and the seed size, various openings parameters may be altered (e.g., the size of the openings, the depth and largest cross sectional aspect).

The seeds can be spread on a top surface of the light barrier layer and spread over the surface so that a seed falls into the light barrier layer openings. In some embodiments, upper layer may include openings that are smaller than the openings in the light barrier. The openings of the upper layer may be positioned to at least partially overlap with the light barrier openings. Seeds can be spread over the upper layer until a seed is in a majority or all of the upper layer openings.

FIG. 7 is an illustration of a side view of an embodiment of the disclosure including a bottom support layer (790) with openings (792) that can be position in close proximity to a soilless growth medium layer (730) and a light barrier layer (720). For example, the growth medium (730) may be positioned between the support layer (790) and light barrier layer (720). The openings (760b,c,d,e, etc.) in the light barrier layer (720) can be of a different size than the openings (792) in the support layer (790). The openings (760b,c,d,e, etc.) may or may not align with openings (792) in the bottom layer (790). The bottom layer (790), the growth medium layer (730) and the light barrier layer (720) are separable from one another and are not fixed together. Openings (760b,c,d,e, etc.) in the light barrier layer may be shaped to hold a seed (742b,c,d,e, etc.) or a developing plant from a germinated seed. In some embodiments the bottom layer 790 can be a single layer. In some embodiments the seeds can be positioned in the openings of the light barrier layer using an automatic seeder.

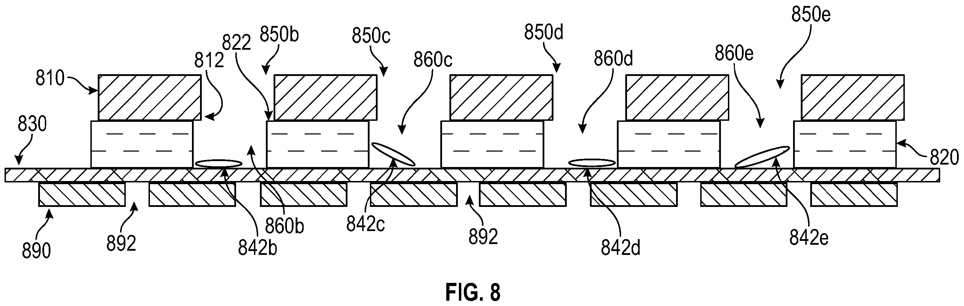

FIG. 8 is an illustration of a side view of an embodiment of the disclosure which includes a support layer (890) with openings (892), a soilless growth medium layer (830), a light barrier layer (820), and an upper layer (810), wherein the soilless growth medium layer (830), the light barrier layer (820), and the upper layer (810) may be positioned above the support layer (890). The upper layer (810) includes openings such as but not limited to (850b, c, d, e), each of the disclosed openings includes a bottom edge (812). The upper layer (810) may be positioned above the light barrier layer (820). The upper layer (810) may be slidably engaged with the light barrier layer (820). The light barrier layer (820) includes openings such as but not limited to (860b, c, d, e), and each of the openings includes a top edge (822). The openings (860b,c,d,e, etc.) in the light barrier layer (820) can be of a different size than the openings (892) in the support layer (890), which may be positioned below the growth medium layer (830), and may be of the same or different size than the openings (850b,c,d,e, etc.) in the upper layer (810). The openings in the light barrier layer may or may not align with openings (892) in the bottom layer (890). The openings (850b,c,d,e, etc.) in the upper layer may partially (or completely) overlap openings (860b,c,d,e, etc.) in the light barrier layer. In some embodiments, the bottom layer (890), the growth medium layer (830), the light barrier layer (820), and the upper layer (810) are separable from one another and are not fixed together. Openings (860b,c,d,e, etc.) in the light barrier layer may be designed to hold a seed (842b,c,d,e, etc.) or a developing plant from a germinated seed. In some embodiments, the upper layer may be slideably positioned atop the light barrier layer and the upper layer opening bottom edges (812) and light barrier layer opening top edges (822) configured, for example with square, non-radiused edges, to cut plant stems when the upper layer and light barrier layer are moved relative to one another and the stems are severed by pinching or shearing between openings in the two surfaces. In some embodiments the upper layer is a plate and the depth of the opening in the light barrier layer is greater than the germinated seed portion on the growth medium.

In embodiments of the disclosure, the various layers (other than the soilless growth medium) such as the support layer, the light barrier layer, and the upper layer, may have 10 % by weight or less moisture content, and in some embodiments, from about 10 micrograms/g water to 0.1 g/g moisture content. Low moisture content in the above-mentioned layers helps reduce algae growth on the soilless growth medium and also inhibits algae growth on these surfaces.

In embodiments of the disclosure, the term "developing plant(s)" can refer to one or more germinating seeds, one or more seedlings with or without true leaves, one or more growing plants, or any combination of these that may be on a generally top surface of the growth medium.

Nutrient solution in embodiments of the disclosure generally refers to a solution that is used to provide one or more of water, metal ions like potassium, sodium, copper, magnesium, sources of nitrogen, phosphorous, and sulfur and other dissolved nutrients to the roots of the developing plants.

In embodiments of the disclosure the term "direct light" refers to light from a source on one side of the soilless growth medium, a portion of which, may pass essentially uninterrupted through an opening such as a tear or hole in the soilless growth medium or a gap between the soilless growth medium and a support layer or frame. "Direct light" that is observed through an opening or gap in the soilless growth medium of a flat indicates that a defect exists in the soilless growth medium that may provide a path for light to reach wetted surfaces below the flat which can promote algae growth. Light that is transmitted through or scatted by the soilless growth medium or materials that make up the layers of the flat is not direct light.

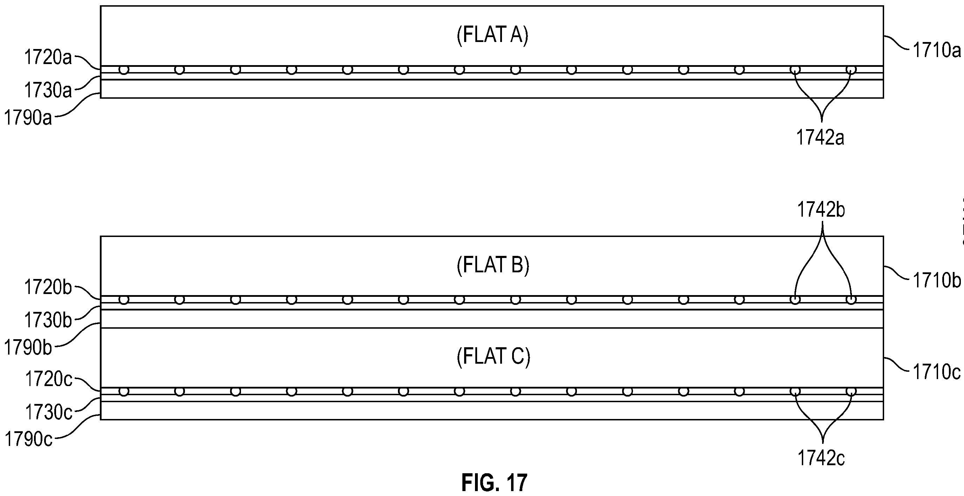

Some embodiments of the disclosure can have a bottom support layer that combines the structural support features of a frame such as L1 with a bottom support such as L2 to support a soilless growth medium as shown for example by the bottom support (390) in FIG. 3, bottom support (790) in FIG. 7, or bottom support (1790a) in FIG. 17. A soilless growth medium, for example (330 or 1730a), which can be a biodegradable, compostable, or other soilless growth media material through which the roots grow can be positioned atop the bottom support. A light barrier layer, for example (320 or 1720a), which also acts as an evaporation barrier for the nutrient solution and that has a plurality of openings through which the developed plants grow is placed atop the growth medium. In some embodiments the light barrier layer with a plurality of openings can be a rigid structure like a basket, container, or a flexible material that can be formed into a pouch/bag, can be placed atop the growth medium and used to collect cut developed plants. Optionally, an upper layer, for example (310, 510, or 1710a), which can be a rigid structure like a basket (e.g. 510), container, or a flexible material that can be formed into a pouch/bag and that has openings through which the plants can grow, can be placed atop the light barrier layer. The integrated bottom support, soilless growth medium, light barrier layer, and optional are freely separable from each other in the flat. In some embodiments, the one or more layers in the flat can be reversibly fixtured together by fasteners, clips, slots in a sidewall, or other, which allows the "sandwich" to be moved as a unit during germination stacking, placement and removal from the growth chamber. The components of the flat can be disassembled in part or entirely for harvesting and cleaning.

In some embodiments, seeds can be germinated using the assembled flats, for example Flat A, Flat B, Flat C, etc. as shown in FIG. 17. Seeds such as (1742a, 172b, 1742c, etc.) can be placed in the openings of the light barriers (1720a, 1720b, 1720c, etc.) The light barrier layer in each flat is positioned atop a corresponding soilless growth media (1730a, 1730b, 1730c, etc.) which is positioned atop the respective integrated bottom support (1790a, 1790b, 170c, etc.) with openings for the root masses. The soilless growth media can be wet prior to seeding, wet after placing seeds in the openings of the light barrier, or any combination of these acts or steps as needed for the particular seeds. A stackable container/basket with openings that partially overlap openings in the light barrier layer is placed on top of the light barrier layer. The seeds positioned in the openings of the light barrier layer in the flat can be germinated. Multiple flat assemblies can be stacked on top on one another to germinate the seeds as illustrated in FIG. 17 by Flat A, Flat B, Flat C. The ability to stack flats on top of each other is advantageous because it eliminates the cost and space requirements for germination carts which are typically used to separate the flats for germination.

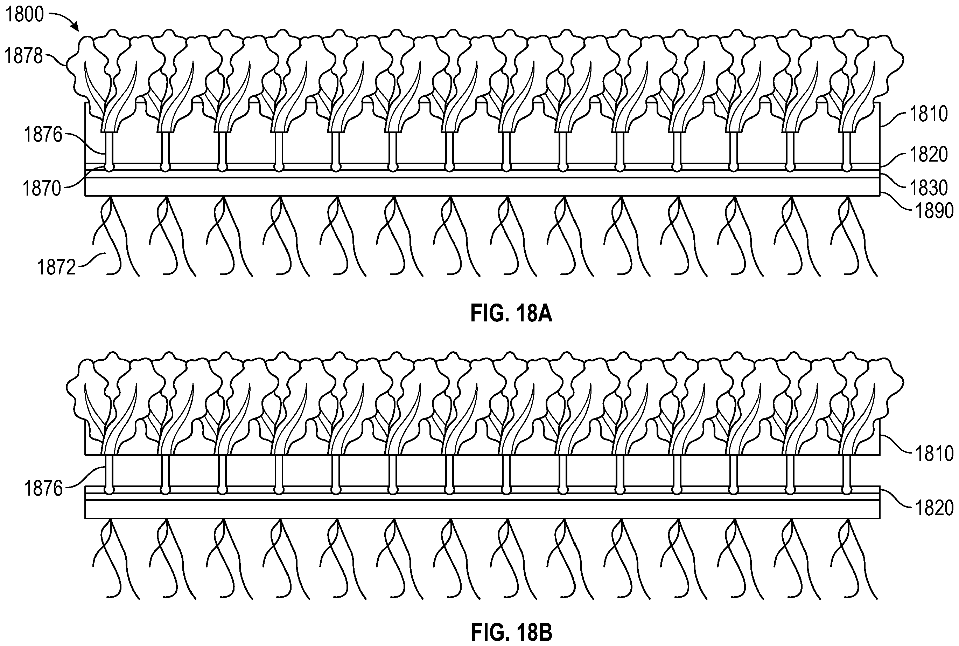

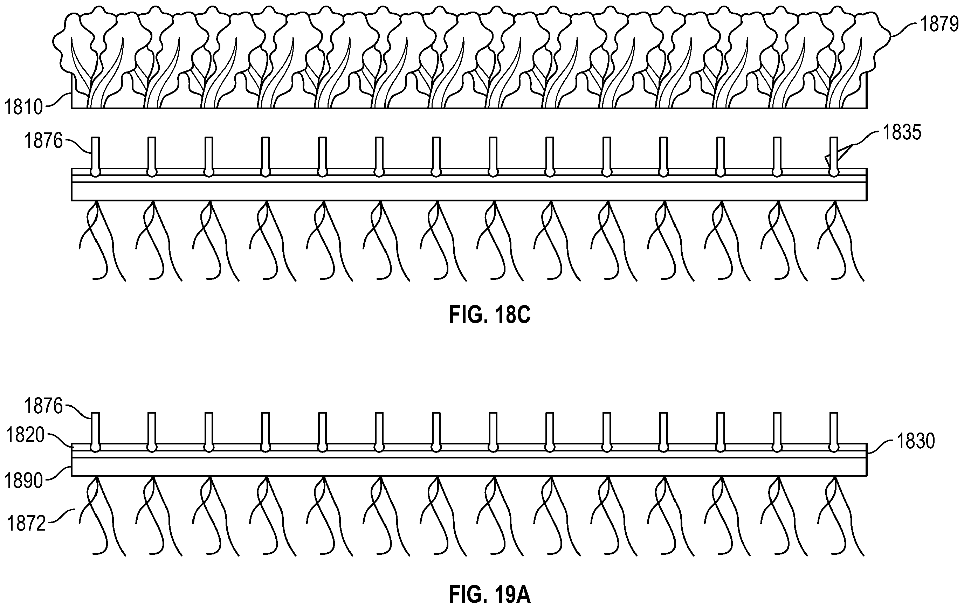

Once the seeds have been germinated, each flat can be separated from the stack and placed in a growth chamber and provided with light and nutrients to develop the plants. In the growth chamber, plants develop and can grow inside of the basket through the openings as illustrated in FIG. 18A for a single flat. The developed plants (1878) from the germinated seed (1870) have stems (1876) protruding through openings in the light barrier layer and upper layer. The plants (1878) have roots (1872) protruding through the soilless growth medium (1830). The developed plants (1878) are essentially contained in the basket (1810) which as illustrated in FIG. 18A. In some embodiments where an upper layer is not used, the light barrier layer can also be a basket with openings that the plants have grown through (not shown) with stems being cut between the light barrier layer and growth medium. The developed plants (1878), can be harvested by separating the container/basket from the assembly as shown in FIG. 18B, and passing a cutter (1835) across the stems as illustrated in FIG. 18C. The cut plants (1879) are collected in the basket (1810) while the stems (1876) and roots (1872) remain with the flat as depicted in FIG. 18C.

As illustrated in FIG. 19A, the stems, roots, or both remaining in the growth medium can optionally be cut from above from the flat sub-assembly without the basket. For example, cut stems (1875) can be isolated by cutting stems (1876) with a cutter (1835). Likewise, cut roots (1871) can be isolated by cutting roots (1872) with a cutter (1835). The harvested flat sub-assembly with or without the stems and roots removed can be disassembled and cleaned. In some embodiments the soilless growth medium can be removed, cleaned and reused. In other embodiments the soilless grown medium can composted with remaining stem and root portions. Cleaning components of the assembled flat can be simplified when using biodegradable or compostable soilless growth media compared to cleaning cloth by eliminating washers, spray booths, and dryers. The biodegradable or a compostable material that supports germination and plant development can removed from the flat pulped or otherwise physically torn after use along with other plant parts following harvest.

Advantageously substantially 100 percent of the developed plants growing through the openings in the light barrier in the flat can be cut by the cutter and there is little or no algae growth on the container surfaces or light barrier layer surfaces. Evaporation from the growth system can be reduced 50 percent or more compared to traditional uncovered cloth media used on flats for aeroponic growing. The assembled flat structure in embodiments of the disclosure eliminates the need to attach stretched cloth to a support tray using snaps and prevents gaps and overspray along the edges of a stretched cloth and frame.

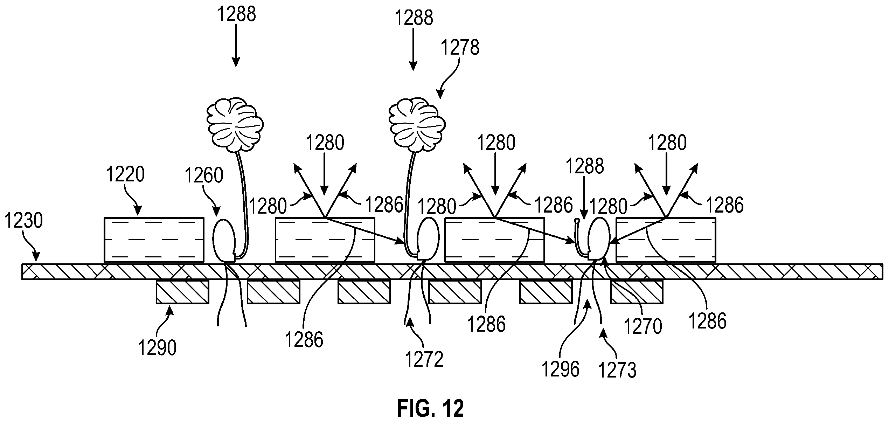

FIG. 12 illustrates light incident on germinating seed(s) (1270) and developing plants (1278). A light barrier layer (1220) may be positioned relative to a growth medium (1230); an optional support layer (1290) having openings (1296) for roots may be positioned below the growth medium (1230). The incident light can include light directly striking (1288) the developing plants (1278) with roots (1272) and light directly striking germinating seed(s) (1270) with root(s) (1273). The germinating seed(s) may be positioned in openings (1260) of the light barrier layer (1220). The incident light can also include light not directly striking (1280) the developing plants (1278) and germinating seed(s) (1270). In embodiments of the disclosure, the light barrier layer (1220) may include a fluorescent material or phosphor material that can convert a portion of the light that is incident on surfaces of the article (e.g., surfaces that are not those of the developing plants and/or germinating seeds) to a longer wavelength light (1286) of which a portion may be re-directed to the germinating seed(s) (1270) and/or leaves of the developing plants (1278). For example, shorter wavelength blue light incident on surfaces, which are not those of developing plants and/or germinating seeds, may be converted to a longer wavelength red light that may be redirected to the developing plants and germinating seed(s). FIG. 12 also illustrates that some incident light (1280) that does not strike the plants can be reflected or re-emitted back to the developing plants (1278) at the same wavelength (1280) or a longer wavelength (1286). A light barrier layer (1220) of sufficient thickness to reduce light that contacts the growth medium (1230) and defining a plurality of openings for seed(s), may be used to redirect the light not only down to the germinating seeds in the openings but redirect light up from the light barrier layer to the leaves of the developing plants. The disclosed light barrier layer (1220) may be fabricated from a fluorescent or phosphor containing material, a light reflecting material, a light dispersing material, and any combination thereof.

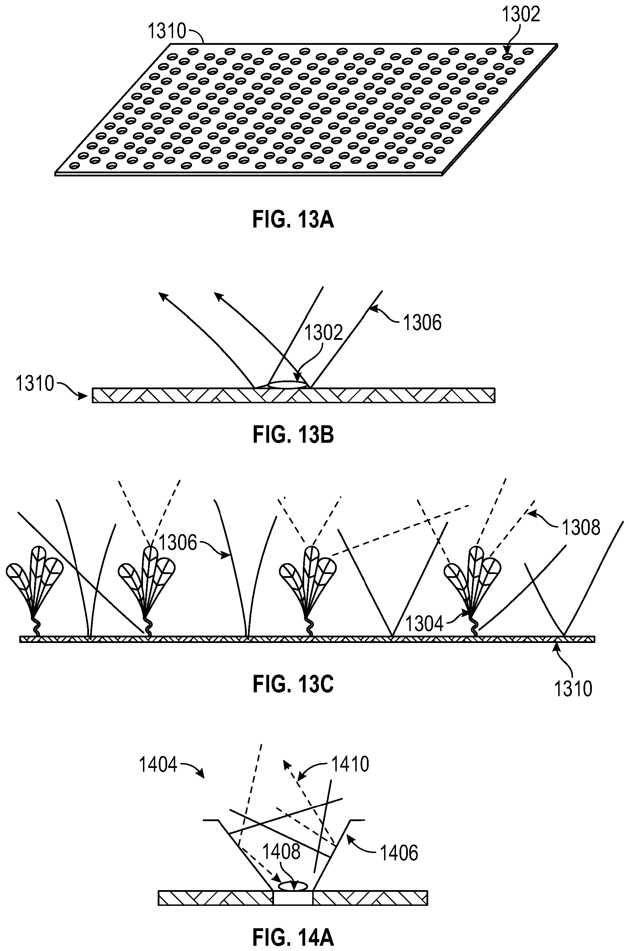

In some instances, seeds, germinated and seeds that have started to grow cotyledons compose a small fraction of the area of the growth medium. For example, seeds (1302) at day 1 (See FIG. 13A), germinated seeds at day 2, and seeds that have started to grow cotyledons at day 4-5 compose about 1 to about 15% of the area of the growth medium (1310).

In systems that lack layers 4 and 5 ("L4 and L5"), a substantial portion of the light directed to the growth medium (L3) misses the plant material (e.g., seeds, germinated seeds, seeds with cotyledons, etc.) and strikes the growth medium. As illustrated in FIG. 13B, light (1306) depicts light that misses seed (1302). As a result, in instances where a system is without L4 and/or L5, the system would benefit from increasing the reflectivity of growth medium (1310) such that at least a portion of the missed light (1306) is reflected back towards seed(s) (1302) and developing plant(s) (1304). As illustrated in FIG. 13C, light (1308) depicts light that directly strikes developing plant(s) (1304) and light (1306) depicts light that missed plant(s) (1304) but was reflected towards plant(s) (1304) from growth medium (1310).

In systems with L4 and/or L5, collectively referred to as the light barrier layer, the light barrier layer may include reflective elements, wherein each opening has been made to direct some of the light incident on the surface or wall of the opening to the developing plant. The light barrier layer reflective elements may be achieved by using a material that has a surface reflectivity of at least about 50% and transmission less than about 2%. This would block the light and may be used to reflect a portion of the incident light to the developing plants. The material may be fabricated from white plastic having reflectivity of at least about 70%.

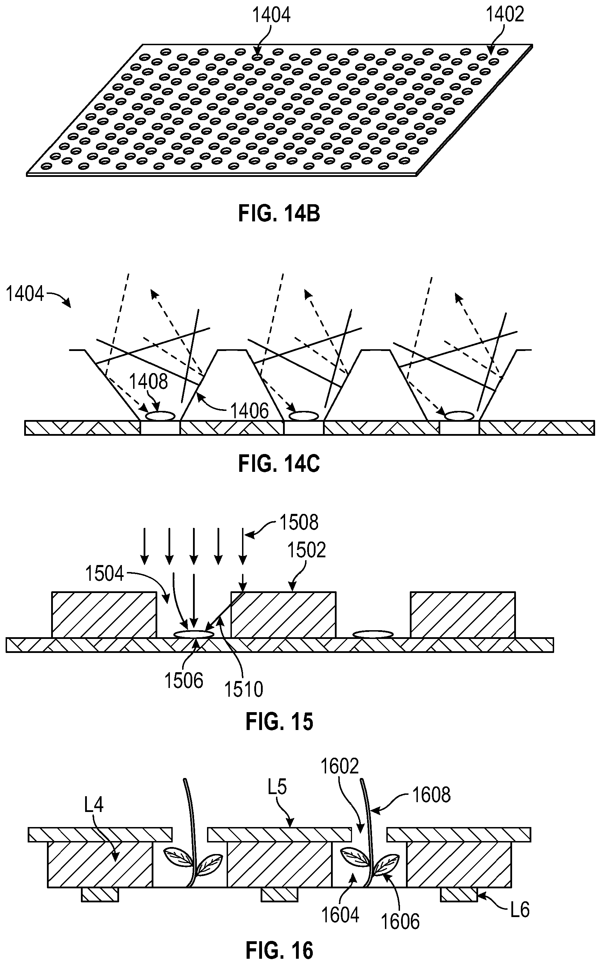

The opening shape may be cylindrical, as shown in Figure 1, or may include tapered walls to form a shape that is generally consistent with a non-imaging optic. The walls of the opening may me metalized or include exposed metal to create a specular reflector. The shape of the walls of the opening may be fabricated to replicate an imaging or non-imaging optic. The opening and walls can have a shape that is consistent with a non-imaging optic and a volume that accommodates one or more seeds, germinated seeds, or developing plants. As shown in FIGS. 14A-14C, light barrier layer (1402) includes a plurality of reflective openings (1404), which are defined by tapered walls (1406). Seed (1408) may be positioned at least partially within opening (1404) and light (1410) may be directed in the direction of opening (1404). As shown in FIG. 14A, light (1410) may reflect off tapered walls (1406) so as to increase the light directed towards seed (1408). FIG. 14C depicts a cross section of FIG. 14B, the light barrier layer (1402).

The light barrier layers, or other layers, may be fabricated from a class of plastic or composite material which may include embedded phosphor and/or fluorescent particles. In instances where the light does not pass through the openings and is not reflected from Fresnel reflections, the light may be absorbed into the body of the plastic light barrier layers. Once in the body of the plastic, the photon may encounter a phosphor and/or fluorescent particle. Typically, the longer the path of the photon within the plastic, the greater the chance of it striking one of these particles. When a photon strikes a phosphor or fluorescent particle, the particle may absorb the photon, then reemit it at a different, longer wavelength and in a random direction. If the direction or re-emission is within the angular distribution that is captured by total internal reflection at the boundary of the flat edges of the plastic and air, then the re-emitted photon will stay captured within the plastic until it is absorbed or it strikes an edge of the plastic.

When the photon strikes the edge of the plastic, it will exit the plastic into the air. The disclosed openings may include at least one of these edges and, in some cases, may include a plurality of edges, so as to increase the probability the re-emitted photon will exit into the air space defined by the disclosed opening. In such instances, the photon may be directed towards and absorbed by the plant material at least partially positioned within the opening. Therefore, photons that would otherwise be unbeneficial to the plant material can be being recovered and reused, thereby increasing the number of photons that interact with a given plant material.

In some embodiments, the light source may produce blue light and the phosphor may emit a longer yellow and/or red wavelength. However, the wavelength of the source and/or the phosphor may be adjusted to optimize plant growth. In some instances, plants will orient and grow in the direction of the blue light and will grow faster from the additional red photons absorbed. As depicted in FIG. 15, blue light (1508) may be applied to the plant material (1506) (e.g., seeds, germinated seeds, seeds with cotyledons, developing plants, etc.) positioned at least partially within an opening (1504) of the light barrier layer (1502). The blue light that interacts with the light barrier layer (1502) may be absorbed and re-emitted as longer wavelength red light (1510). The red light (1510) may be at least partially directed towards the plant material (1506). The red light (1510) may be directed towards the plant material (1506) on an angle. Additionally, re-emitted photons that enter the opening but are not absorbed by the plant material may be absorbed by the cloth where they may assist to warm the plant material.

In some embodiments, it may be beneficial to contain part of the plant material within the opening in order to expose the plant material to the increased light density, as discussed above. Particularly in those embodiments where L4 is at least partially fabricated with a fluorescent plastic. As depicted in FIG. 16, L5 may be at least partially transparent and may include at least one opening (1602) having a smaller diameter than the L4 opening (1604). In such instances, a portion of the plant material will be too large to pass through the L5 opening such that a portion of the plant material will continue to grow and fill the opening of L4. For example, the cotyledons (1606) of the plant may be captured within the L4 opening and benefit from increased light level. The opening (1602) in L5 may be large enough to allow the stem (1608) of the plant to continue to grow through the opening (1602) and into the air above L5.

In additional embodiments, an optional layer may be incorporated between L3 and L4, depicted herein as L6. L6 may be fabricated from a lower index of refraction material than L4. In operation, L6 prevents L4 from contacting L3 thereby maintaining an air barrier between L4 and L3 across a majority of the area. The disclosed air barrier is beneficial because it allows a greater range of angles of re-emitted light to be reflected by total internal reflection, which increases the amount of re-emitted light that exits into the openings (1602, 1604). L6 may be fabricated from a lower index of refraction material than L4, and L6 materials can include but are not limited to plastics like polytetrafluoroethylene, poly(chlorotrifluoroethylene), poly(vinylidene fluoride), and other fluorine containing polymer material (e.g., mesh or perforated sheet).

FIG. 17 illustrates an embodiment of the disclosure where layers of the flat include, for example, a bottom support layer (1790c), a soilless growth medium (1730c) with seeds, a light barrier layer (1720c) with openings that developing plants grow through, and an upper layer (1710c) with openings. These layers can be assembled and stacked atop on one another to form a flat (e.g. Flat C). Additional flats, for example Flat B and Flat A, which can have the same or different layers and/or seed types (shown as being similar to Flat C), can be stacked atop Flat C and together used for seed (1742a, 1742b, and 1742c) germination. Following seed germination, the flats can be separated for placement in a growth chamber. In FIG. 17, the upper layers (1710a, 1710b, and 1710c) can be containers that have openings through which the developing plants can grow.

FIG. 18A illustrates an embodiment of the disclosure that depicts developed plants (1878) with roots (1872), and stems (1876) from germinated seeds (1870). The stems (1876) are depicted growing through openings in an upper layer container (1810) and openings of the light barrier layer (1820) of a the flat (1800). The flat (1800) includes a bottom support layer (1890), a soilless growth medium (1830), a light barrier layer (1820) with openings for the developing plants (1978) and the upper layer (1810) with openings for the developing plants. FIG. 18B illustrates separation of the upper layer container (1810) from the top surface of the light barrier layer (1820) and exposed stems (1876). FIG. 18C illustrates cutting the stems (1876) growing through the plurality of openings in the light barrier layer (1820) with a cutter (1835) that passes between the separated upper layer container (1810) and light barrier layer (1820) top surface. The harvested portion of the plants (1879) are collected in the upper layer container (1810).

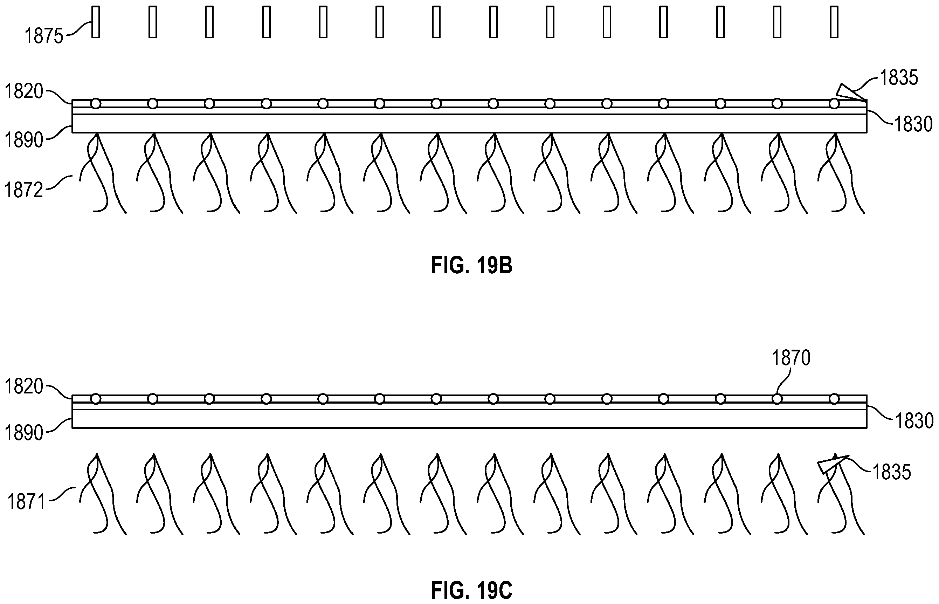

FIG. 19A illustrates stems (1876) and roots (1872) from the remaining portions of the harvested plants. The roots (1872) grow through the soilless growth medium (1830) and protrude through openings in the support layer (1890). The remaining stems (1876) are shown protruding though openings in the light barrier layer (1820). FIG. 19B illustrates cut stems (1875) obtained by passing a cutter (1835) across the stems. FIG. 19C illustrates cut roots (1871) obtained by passing cutter (1835) across the portions of the roots near the support layer (1890).

Embodiments of the disclosure may be used in aeroponic systems generally described in U.S. Pat. Pub. No. 20140137471 (Harwood) and include a growth chamber with at least one aeroponic module. Flats, in embodiments of the disclosure, may include the support layer, soilless growth medium, light barrier layer, and optionally the upper layer and may be advanced through the growth chamber manually, automatically, and a combination thereof. In some embodiments, the support layer, soilless growth medium, light barrier layer, and optionally an upper layer, may be attached to a frame which has cross members (see FIG. 1, L1) to support the multilayer assembly. These trays can be implemented for seeding and harvesting as described herein, and these trays can be set on rails on each side of the growth chamber and moved through the chamber. An automated cutting apparatus (not shown) may be implemented to cut the plants with a cutter. The growth chamber can generally enable management of chamber temperature, humidity, and carbon dioxide for the developing plants. Air flow in the growth chamber and individual modules may be controlled by air moving systems (e.g., fans). A growth chamber can house a number of aeroponic modules. A plurality of tubes can be used to transport a nutrient solution from a nutrient tank, pumped by a nutrient pumping system, to a plurality of spray nozzles. The spray nozzles can spray a nutrient spray in close proximity to the bottom of flats and through the openings in the bottom support to wet the soilless growth medium. The nutrient solution provides nutrients to the developing plants. Excess nutrient solution can drip down onto a nutrient return tray, which can return the nutrient solution to nutrient tank for reuse. A cross-section of nutrient return tray can have an arcuate shape. Although a closed system is described herein, the soilless media materials can optionally be implemented in a flow to drain system, i.e., an aeroponic system without reusing the excess nutrient solution. The layers forming a flat in an aeroponic system can be exposed to lighting that can include one or more light sources including high pressure sodium lamps and light emitting diodes.

Embodiments of the disclosure may also be used with hydroponic growth systems. Hydroponic plant growth systems can include an open-topped outer container for holding a liquid combination of water and plant growing nutrients. The container can be configured to allow drainage of the liquid. Flats used for hydroponic growth systems may include the support layer, soilless growth medium, light barrier layer, and optionally the upper layer. The flats may be placed on or within the outer container to receive the nutrients from below. Lighting may be provided above the container to develop the plants. Plants are developed with a portion or all of the roots contacting the liquid medium in the container. An inner container that includes openings may be used to allow liquid to enter the growing system and to drain from it. Automatic pumping systems may be used to maintain the correct amount and level of nutrient solution and oxygen to contact the developing plant roots in the growth chamber.

### General Experimental Conditions

An aeroponic system is utilized that includes a growth chamber having a flat, a drip pan, nutrient sprayers and drainage, and lighting as disclosed in Harwood, U.S. Pat. Pub. No. 20140137471 the contents of which are incorporated herein by reference in their entirety. Further, the method in embodiments of the disclosure generally includes spraying a nutrient solution on at least one surface of the soilless growth medium. The soilless growth medium is held in place between the bottom support and the light barrier layer without stretching.

Systems of the present disclosure generally satisfy one or more germination factors and plant developing factors as disclosed in Harwood. The germination factors can include at least one of, e.g., a temperature range, a pH level range, a relative humidity range, a light intensity range, a light spectrum, an electrical conductivity range, seed treatments such as scarification, prior heating or cooling, and the like. The temperature range can be from approximately 5° C. to approximately 35° C. The pH level range can be from approximately 4 to approximately 8. The relative humidity range can be from approximately 20% to approximately 100%. The light intensity range can be from approximately 0 µmol·m²·s⁻¹ to approximately 250 µmol·m⁻²·s⁻¹. The light spectrum can be from approximately 400 nm to approximately 700 nm with some tolerance in the UV-B radiation, e.g., approximately 280 nm to approximately 315 nm. The electrical conductivity range can be from approximately 1.5 deciSiemens per meter (dS·m⁻¹) to approximately 3.0 dS·m⁻¹. For some seeds, a photoperiodism may exist which requires both light and dark periods. In some embodiments, e.g., for some cold season leafy greens (such as Eruca saliva), a preferred temperature can be approximately 22° C., the pH level range can be from approximately 5.0 to approximately 5.5, the electrical conductivity range can be from approximately 2.0 dS·m⁻¹ to approximately 2.5 dS·m⁻¹, and the relative humidity can be approximately 50%. In some embodiments, e.g., some cold season leafy greens, the light intensity during germination can be approximately 50 µmol·m⁻²·s⁻¹ and approximately 250 µmol·m⁻²·s⁻¹ during the baby stage of maturity. Once a plant has emerged, up to approximately 1000 ppm of CO₂ may be applied for advantageous growth. In some embodiments, the light spectrum after germination can be approximately 440 nm blue and approximately 660 nm red. However, it should be understood that the ranges provided herein may be varied depending on the requirements and/or optimal environments for germinating and growing alternative seeds or plants.

Growing and development factors of plants on the soilless growth media was generally performed in a single growth chamber using LED lighting, providing the same nutrient solution, and having substantially similar temperature, air movement, and humidity. Light intensity levels could be varied between greater than 0 micromoles per meter squared per second (µmol⁻¹ m⁻² s⁻¹) to 300 µmol⁻¹ m⁻² s⁻¹. Additional climate conditions in the growth chamber, including the temperature measured in degrees Celsius can be 5° C. to approximately 35° C. The nutrient solution electrical conductivity is measured in deciSiemens per meter (dS/m). In particular, growing environmental conditions for the nutrient solution can include a nutrient temperature range of approximately 15 °C to approximately 25 °C, a pH level range of approximately 4.3 to approximately 6.6, and an electrical conductivity range of approximately 1.3 dS/m to approximately 2.9 dS/m.

### Example 1

This example illustrates growing baby spinach on a non-cloth substrate using a multilayer flat.

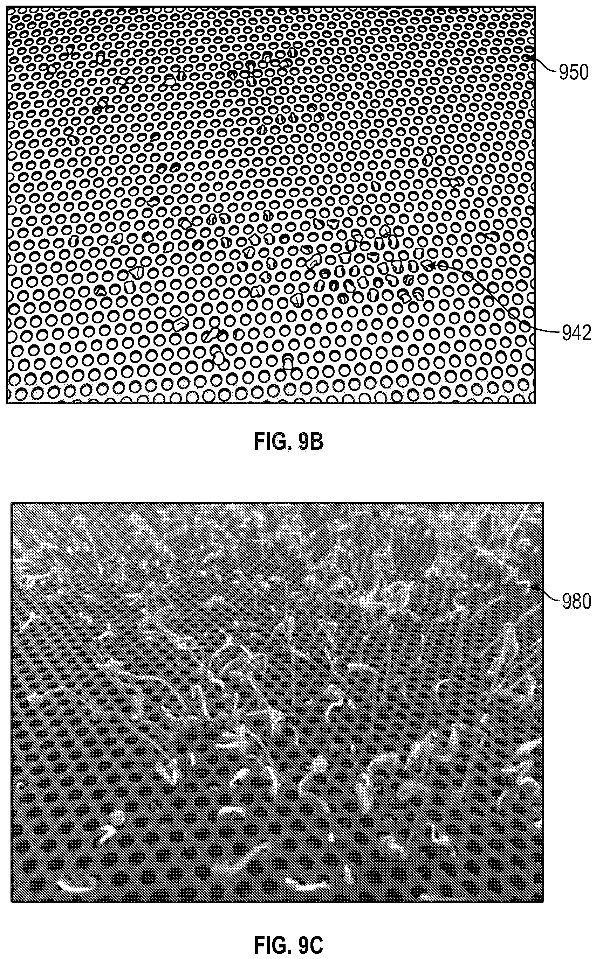

Spinach seeds were germinated and developed into plants on a flat using a four layer structure. The structure that was used is illustrated in FIGS. 9 and 10 and included a frame (905 (same as L1 in FIG. 1) ), a polyvinyl chloride (PVC) support layer 1090 with a plurality of openings 1092 in a grid or array; a paper based soilless growth medium (930, 1030), and a PVC light barrier layer (1020) with a plurality of openings (950) in a grid or array that was positioned atop the paper growth medium (930, 1030). The paper based soilless growth medium in this example supported seed germination and root penetration. The paper was held in place between the support layer and the light barrier layer without stretching or securing the paper to the bottom support or light barrier layers. The openings in the light barrier layer were about 0.32 centimeters (0.125 inches) in diameter and spaced apart by about 0.95 centimeters (0.375 inches) center to center in a grid pattern. The openings in the support layer were about 1.3 centimeters (0.5 inches) in diameter and spaced apart by about 2.2 centimeters (0.875 inches) center to center in a grid pattern.

Spinach seeds (942) were initially spread on a top surface of the light barrier layer (920) as shown in FIG. 9A. Spinach seeds (942) were swept into a plurality of the openings (950) with about one seed in each opening; several of the openings are shown without a seed, but a majority of the openings contained at least one seed. Excess seeds were removed from the light barrier layer (920) prior to germination, by sweeping or brushing, as shown in FIG. 9B. After 5 days, germinated seeds and seedlings (980) were observed as shown in FIG. 9C growing through the openings in light barrier layer.

Roots from the spinach seedlings penetrated the paper growth medium (1030) as shown in FIG. 10A. As further illustrated in FIG. 10A, the support layer (1090), growth medium (930, 1030), and light barrier layer (1020) were freely separable. Also shown is the much greater light transmittance (direct light) through the openings (-100 %) in the light barrier layer (1020) compared to the un-opened or solid regions (-0% light transmittance) of the light barrier layer. After seven days of growth in an aeroponic growth chamber, with a spray of nutrient solution and oxygen from the air provided to the roots (1072), and light from light emitting diodes ("LED") lamps supplied to the top surface of the light barrier layer, the roots are clearly visible growing through and accommodated by the openings (1092) of the bottom support (1090), as shown in FIG. 10B. Developing plants (1080) are protruding through the openings in the light barrier layer as shown in FIG. 10C.

Imprints or an image of the openings were observed on the paper which were formed by the close proximity or contact between the soilless paper growth medium and the edges of the light barrier openings. The outline of the imprints or image of the light barrier layer openings on the paper showed that seeds could be isolated to the openings and were not lodged or trapped below solid portions of the soilless growth medium.

Previous attempts to germinate and grow spinach from seeds using a cloth growth medium without a light barrier layer were unsuccessful.

### Example 2

This example illustrates greater than 90% harvest of developed plants grown on the multilayer flats and low algae growth on the soilless growth medium.

Baby arugula was grown on two flats that included a metal frame (L1), a bottom support layer (L2), an unstretched polyester based cloth soilless growth medium that was held in place by an adjacent light barrier layer, and an upper layer. The unstretched polyester based cloth soilless growth medium supported seed germination and penetration of the roots through the medium. The light barrier layer and upper layer were made of an opaque, non-transparent, white plastic material. The un-opened or solid portions of the light barrier layer and the upper layer had a light transmittance (visually determined) that was less than the amount of the light transmittance through any opening in the light barrier layer. The upper layer, light barrier layer, cloth, and support layer were sandwiched together by two threaded bolt fasteners connected to the frame end. The openings in the light barrier layer were about 0.64 centimeters (0.25 inches) in diameter and spaced apart by about 1.27 centimeters (0.5 inches) center to center in a grid pattern. The two flats were each seeded with approximately the same amount of Arugula. The number of arugula seeds in the openings were distributed and contained between 0 (empty) and 3 or more seeds per opening; a majority of the openings contained a seed. The flats with the seeds and the unseeded flats were placed in a germination cart. Over 90% of the seeds in the openings on the two flats were germinated.

The flats with the germinated seeds were placed in a growth chamber and were separated by blank, unseeded flats having the same frame and the same soilless growth medium stretch and fixed to the frame.

After approximately 14 days of plant development under the same conditions including nutrients, light, and temperature, the flats were removed from the growth chamber. Stems from developed plants were observed growing from the soilless growth medium, through the plurality of openings in the light barrier layer, and through the openings in the upper layer. The plant canopy was substantially uniform and dense across each of the flats with the developed plants and no gaps were observed in plant density at the edges of the flats. The bare, unseeded flats from the same growth chamber were observed to have algae present over central portions of the flat on the growth medium.

The developed plants on each of the flats were harvested by separating the openings of the light barrier layer and the upper layer by moving a 0.48 centimeter diameter braided wire between the separated layers and across the plant stems to cut them. Cut plants were placed into boxes for weighing.

After pulling the wire between the separated layers to cut the plant stems, the upper layer was observed to have little or no algae growth on the top surface and few if any stems protruded through the openings and essentially 100 percent of the developed plants through which the wire was pulled were cut. After removing the bolt fasteners, the light barrier layer and upper layer were easily removed from atop the cloth soilless growth medium; the light barrier layer and cloth soilless growth medium layers were also readily separated from each other. The top surface of the cloth soilless growth medium was observed to have imprints or images of the array of openings from the light barrier layer on it. The imprints or images of the openings were formed by the contact or close proximity between the soilless cloth growth medium and the edges of the openings. The clear outline of the imprints or images of the light barrier layer openings and absence of isolated seeds outside of the imprints on the soilless growth medium illustrated that contact or close proximity between the edges of the light barrier openings and soilless growth medium was a sufficient barrier to prevent seeds from becoming positioned or trapped between the solid portions of the light barrier layer and the cloth. Some residual stems were observed in the imprinted areas after cutting. Substantially all the plants, greater than 90%, where the wire passed between the light barrier layer and upper layer were cut.

The harvest yield from the two flats, including stems and leaves, were 13.8 lbs. (6.3 kg) and 15.9 lbs. (7.2 kg).

### Example 3

This example illustrates the reduced evaporation rate of water from a test flat having a light barrier layer atop of a soilless growth medium compared to the evaporation rate of water from a flat without the barrier layer under the same test conditions.

The evaporation rate of water from a control flat that included a polar fleece cloth as disclosed in Harwood U.S. Pat. Pub. No. 20140137471 and a test flat that included the same polar fleece cloth and a light barrier layer (including openings and solid portions) positioned atop the cloth were measured. The test equipment included a 0 to 181,4 kg (400 pound) scale with data port that was positioned underneath the flats to measure changes in weight with time.

Air temperature, humidity and water temperature in the test apparatus were measured using sensors and data loggers used to record the sensor outputs. The control and test flats were similar in size and measured approximately (1.5 meters x 0.75 meters; 5 foot x 2.5 foot). The flats were placed on a pan that was interfaced with the scale. Fans and lights were installed on the test setup to simulate the evaporative environment in growth chambers. A 5 gallon reserve of water at room temperature (~70 F, 21 °C) was used to soak the cloths. The scale was zeroed and the dry test medium on a tray and pan was placed into the evaporation testing set-up to obtain the dry weights.

The cloth for the control flat and test flats were similarly treated by submersion in the water and allowed to soak for one minute. The cloths were removed from the bucket and allowed to drip into the bucket to a similar state and then attached to the tray; a light barrier layer was placed overtop the wet cloth on the test flat. Zero the scale and place the tray into the test set up and center the tray in the pan. The pan was interfaced with the scale to measure the weight change of the fabric as water evaporated from it. Turn on the scale, the temperature and humidity data logger, LED light rack and the fans. Record weight, temperature, and humidity readings every 1 minute. After one hour shut down the test.

The evaporation testing showed that the rate of evaporation from the test flat (included the light barrier layer with openings and solid portions) was 50% less than the rate of evaporation from the control flat (no light barrier layer). A lower evaporation rate from a flat is advantageous because it reduces water loss from the nutrient solution thereby improving plant growing process stability. Less water loss also reduces equipment and operational costs associated with dosing equipment, environmental humidity control, sensors, and chemical analysis to maintain the nutrient solution concentration.

While the disclosure has been described in detail in connection with only a limited number of aspects and embodiments, it should be understood that the disclosure is not limited to such aspects. Rather, the disclosure can be modified to incorporate any number of variations, alterations, substitutions, or equivalent arrangements not heretofore described, but which are commensurate with the scope of the claims. Additionally, while various embodiments of the disclosure have been described, it is to be understood that aspects of the disclosure may include only some of the described embodiments. Accordingly, the disclosure is not to be seen as limited by the foregoing description, but is only limited by the scope of the appended claims.

## Claims

1. A method of harvesting plants comprising:
a. providing an article for germinating seeds and growing plants, the article comprising (i) a soilless growth medium (L3) that supports seed germination and penetration of roots from developing plants therethrough, (ii) a light barrier layer (L4) with a plurality of openings, a shape of the openings accommodates one or more seeds in each opening, un-opened portions of the light barrier layer have a light transmittance that is less than the amount of the light transmittance through any opening in the light barrier layer, the light barrier layer is separable from, positioned atop, and structurally distinct from the soilless growth medium, and (iii) an upper layer (L5) that is separable from and positioned atop the light barrier layer, the upper layer has a plurality of openings;
b. moving the openings of the light barrier layer, the upper layer, or a combination of these relative to the soilless growth medium; and
c. cutting the plant stems that grow through the plurality of openings in the light barrier layer.

2. The method of claim 1 wherein the upper layer (L5) that is separable from and positioned atop the light barrier layer (L4), the upper layer has a plurality of openings, the openings in the upper layer overlap at least a portion of the openings in the light barrier layer, the overlap of the openings sufficient for light to reach germinating seeds and developing plants.

3. The method of claim 1 wherein the article further comprises a bottom support layer (L2), said bottom support layer has a plurality of openings through the bottom support layer that accommodate one or more root masses; the bottom support layer positioned below the soilless growth medium (L3) and is separable therefrom.

4. The method of claim 1 wherein said light barrier layer (L4) forms a barrier with a top surface of the soilless growth medium (L3), said barrier precludes seeds from becoming positioned between solid portions of the light barrier layer and the top surface of the soilless growth medium.

5. The method of harvesting plants as in claim 1 wherein moving comprises separating the light barrier layer (L4), the upper layer (L5) or a combination of these from the soilless growth medium (L3).

6. The method of harvesting plants as in claim 1 wherein moving comprises sliding one or more of the light barrier layer (L4), the bottom support layer (L2) the upper layer (L5), or combinations of these.

7. The method of harvesting plants as in claim 1 wherein cutting the plant stems comprises moving a cutter (10) across the plant stems.

8. The method of harvesting plants as in claim 7 wherein sliding one or more of the light barrier layer (L4), the bottom support layer (L2), or the upper layer (L5), or combinations of these cuts the plant stems.

9. An article that supports germinating seeds and growing plants comprising:
a bottom support layer (L2) that has a plurality of openings through the bottom support layer that accommodate one or more root masses;
a soilless growth medium (L3) positioned atop the bottom support layer and separable therefrom, said soilless growth medium supports seed germination and penetration of roots from developing plants therethrough;
a light barrier layer (L4) with a plurality of openings shaped to contain a seed, un-opened portions of the light barrier layer (L4) have a light transmittance that is less than the amount of the light transmittance through any opening in the light barrier layer, the light barrier layer is separable from, positioned atop, and structurally distinct from the soilless growth medium and a proximity of the light barrier layer bottom surface with the soilless growth medium layer prevent seeds from becoming positioned or trapped between the layers; ; and
an upper layer (L5) that is separable from and positioned atop the light barrier layer, the upper layer has a plurality of openings, the openings in the upper layer overlap at least a portion of the openings in the light barrier layer, the overlap sufficient for light to reach germinating seeds and to develop plants.

10. The article of claim 9 wherein the size of the openings of the upper layer (L5) are substantially the same size as the seeds and the openings in the upper layer are smaller than the openings in the light barrier layer (L4).

11. The article of claim 9 wherein the light barrier layer L4) or the upper layer (L5), or the light barrier layer and upper layer comprise a fluorescent material.

12. The article of claim 9 wherein the upper layer (L5) is slideably positioned atop the light barrier layer (L4) and the upper layer opening bottom edges and the light barrier layer opening top edges are shaped to cut plant stems.

13. The article of claim 12 wherein one or more of the light barrier layer (L4) or the upper layer (L5) comprise a fluorescent material, and one or more seeds are positioned in a plurality of the openings of the light barrier layer and atop the soilless growth medium.

14. The article of claim 9 wherein the light barrier layer (L4) comprises a fluorescent material and the shape of the plurality of openings in the light barrier layer are consistent with the shape of a non-imaging optic.

15. A method of planting seeds comprising:
positioning seeds into a plurality of openings in a light barrier layer (L4),
wherein an upper layer (L5) is separable from and positioned atop the light barrier layer, the upper layer has a plurality of openings, the openings in the upper layer overlap a portion or all of the area of the openings in light barrier layer, the overlap sufficient for light to illuminate germinating seeds and developing plants; and
wherein a majority of the plurality of openings in the light barrier layer have a seed, said light barrier layer overlies a soilless growth medium (L3) and is separable therefrom, the soilless growth medium overlies a support layer (L2) that has openings to accommodate one or more root masses growing through the soilless growth medium.

16. The method of claim 15 further comprising irradiating a portion of the light barrier layer (L4), converting a portion of the radiation to a longer wavelength, and contacting a portion of germinating seeds or developing plants with the longer wavelength radiation.

## Patentansprüche

1. Ein Verfahren zum Ernten von Pflanzen aufweisend:
a. Bereitstellen eines Gebildes zum Keimen von Samen und zum Wachsen von Pflanzen, wobei das Gebilde aufweist
(i) ein erdloses Wachstumsmedium (L3), das die Keimung von Samen und das Durchdringen von Wurzeln von sich entwickelnden Pflanzen unterstützt;
(ii) eine Lichtsperrschicht (L4) mit einer Mehrzahl von Öffnungen, wobei eine entsprechende Form der Öffnungen einen oder mehrere Samen in jeder Öffnung aufnimmt, wobei ungeöffnete Abschnitte der Lichtsperrschicht eine Lichtdurchlässigkeit aufweisen, die geringer ist als die Lichtdurchlässigkeit durch irgendeine Öffnung in der Lichtsperrschicht, wobei die Lichtsperrschicht von dem erdlosen Wachstumsmedium trennbar ist, auf diesem angeordnet ist und sich strukturell von diesem unterscheidet, und
(iii) eine obere Schicht (L5), die von der Lichtsperrschicht abtrennbar und auf ihr angeordnet ist, wobei die obere Schicht eine Mehrzahl von Öffnungen aufweist;
b. Bewegen der Öffnungen der Lichtsperrschicht, der oberen Schicht oder einer Kombination von diesen relativ zu dem erdlosen Wachstumsmedium; und
c. Schneiden der Pflanzenstämme, die durch die Mehrzahl von Öffnungen in der Lichtsperrschicht wachsen.

2. Das Verfahren nach Anspruch 1, wobei die obere Schicht (L5), die von der Lichtsperrschicht (L4) trennbar und auf dieser angeordnet ist, eine Mehrzahl von Öffnungen aufweist, wobei die Öffnungen in der oberen Schicht mindestens einen Teil der Öffnungen in der Lichtsperrschicht überlappen, wobei die Überlappung der Öffnungen ausreicht, damit Licht keimende Samen und sich entwickelnde Pflanzen erreichen kann.

3. Das Verfahren nach Anspruch 1, wobei das Gebilde ferner eine untere Haltemittelschicht (L2) aufweist, wobei die untere Haltemittelschicht eine Mehrzahl von Öffnungen durch die untere Haltemittelschicht hindurch aufweist, die eine oder mehrere Wurzelmassen aufnehmen; wobei die untere Haltemittelschicht unter dem erdlosen Wachstumsmedium (L3) angeordnet und von diesem trennbar ist.

4. Das Verfahren nach Anspruch 1, wobei die Lichtsperrschicht (L4) eine Sperrschicht mit einer oberen Oberfläche des erdlosen Wachstumsmediums (L3) ausbildet, wobei die Sperrschicht verhindert, dass Samen zwischen festen Teilen der Lichtsperrschicht und der oberen Oberfläche des erdlosen Wachstumsmediums zu liegen kommen.

5. Das Verfahren zum Ernten von Pflanzen nach Anspruch 1, wobei das Bewegen das Trennen der Lichtsperrschicht (L4), der oberen Schicht (L5) oder einer Kombination von diesen von dem erdlosen Wachstumsmedium (L3) aufweist.

6. Das Verfahren zum Ernten von Pflanzen nach Anspruch 1, wobei das Bewegen das Verschieben einer oder mehrerer der Lichtsperrschicht (L4), der unteren Haltemittelschicht (L2), der oberen Schicht (L5) oder Kombinationen davon aufweist.

7. Das Verfahren zum Ernten von Pflanzen nach Anspruch 1, wobei das Schneiden der Pflanzenstämme das Bewegen eines Schneidwerkzeugs (10) über die Pflanzenstämme aufweist.

8. Das Verfahren zum Ernten von Pflanzen nach Anspruch 7, wobei das Gleiten einer oder mehrerer der Lichtsperrschichten (L4), der unteren Haltemittelschicht (L2) oder der oberen Schicht (L5) oder Kombinationen davon die Pflanzenstämme schneidet.

9. Ein Gebilde, das das Keimen von Samen und das Wachsen von Pflanzen unterstützt, aufweisend:
eine untere Haltemittelschicht (L2), die eine Mehrzahl von Öffnungen durch die untere Haltemittelschicht aufweist, die eine oder mehrere Wurzelmassen aufnehmen;
ein erdloses Wachstumsmedium (L3), das oben auf der unteren Haltemittelschicht angeordnet ist und davon getrennt werden kann, wobei das erdlose Wachstumsmedium die Keimung von Samen und das Durchdringen von Wurzeln von sich entwickelnden Pflanzen durch das Medium unterstützt;
eine Lichtsperrschicht (L4) mit einer Mehrzahl von Öffnungen, die so geformt sind, dass sie Samen enthalten, wobei ungeöffnete Abschnitte der Lichtsperrschicht (L4) eine Lichtdurchlässigkeit aufweisen, die geringer ist als der Betrag der Lichtdurchlässigkeit durch irgendeine Öffnung in der Lichtsperrschicht, wobei die Lichtsperrschicht von dem erdlosen Wachstumsmedium trennbar ist, auf diesem angeordnet ist und sich strukturell von diesem unterscheidet, und wobei eine Nähe der unteren Oberfläche der Lichtsperrschicht mit der Schicht des erdlosen Wachstumsmediums verhindert, dass Samen zwischen den Schichten angeordnet oder eingeschlossen wird; und
eine obere Schicht (L5), die von der Lichtsperrschicht trennbar und auf dieser angeordnet ist, wobei die obere Schicht eine Mehrzahl von Öffnungen aufweist, wobei die Öffnungen in der oberen Schicht mindestens einen Teil der Öffnungen in der Lichtsperrschicht überlappen, wobei die Überlappung ausreicht, damit Licht keimende Samen erreicht und Pflanzen entwickelt.

10. Gebilde nach Anspruch 9, wobei die Größe der Öffnungen der oberen Schicht (L5) im Wesentlichen die gleiche Größe wie die der Samen hat und die Öffnungen in der oberen Schicht kleiner sind als die Öffnungen in der Lichtsperrschicht (L4).

11. Gebilde nach Anspruch 9, wobei die Lichtsperrschicht (L4) oder die obere Schicht (L5), oder die Lichtsperrschicht und die obere Schicht ein fluoreszierendes Material aufweisen.

12. Gebilde nach Anspruch 9, wobei die obere Schicht (L5) verschiebbar auf der Lichtsperrschicht (L4) angeordnet ist und die Unterkanten der Öffnung der oberen Schicht und die Oberkanten der Öffnung der Lichtsperrschicht so geformt sind, dass sie Pflanzenstämme schneiden.

13. Gebilde nach Anspruch 12, wobei eine oder mehrere der Lichtsperrschichten (L4) oder der oberen Schicht (L5) ein fluoreszierendes Material aufweisen und ein oder mehrere Samen in einer Mehrzahl der Öffnungen der Lichtsperrschicht und auf dem erdlosen Wachstumsmedium angeordnet sind.

14. Gebilde nach Anspruch 9, wobei die Lichtsperrschicht (L4) ein fluoreszierendes Material aufweist und die Form der Mehrzahl von Öffnungen in der Lichtsperrschicht mit der Form einer nicht-abbildenden Optik übereinstimmt.

15. Ein Verfahren zum Einpflanzen von Samen aufweisend:
Positionieren von Samen in eine Mehrzahl von Öffnungen in einer Lichtsperrschicht (L4), wobei eine obere Schicht (L5) von der Lichtsperrschicht trennbar und auf dieser positioniert ist, die obere Schicht eine Mehrzahl von Öffnungen aufweist, die Öffnungen in der oberen Schicht einen Teil oder die gesamte Fläche der Öffnungen in der Lichtsperrschicht überlappen, wobei die Überlappungen ausreichen, um keimende Samen und sich entwickelnde Pflanzen zu beleuchten; und
wobei eine Mehrzahl der Mehrzahl von Öffnungen in der Lichtsperrschicht einen Samen aufweist, die Lichtsperrschicht über einem erdlosen Wachstumsmedium (L3) liegt und von diesem trennbar ist, das erdlose Wachstumsmedium über einer Haltemittelschicht (L2) liegt, die Öffnungen aufweist, um eine oder mehrere Wurzelmassen aufzunehmen, die durch das erdlose Wachstumsmedium wachsen.

16. Das Verfahren nach Anspruch 15, ferner aufweisend, dass ein Teil der Lichtsperrschicht (L4) bestrahlt wird, ein Teil der Strahlung in eine längere Wellenlänge umgewandelt wird und ein Teil der keimenden Samen oder sich entwickelnden Pflanzen mit der längerwelligen Strahlung in Kontakt gebracht wird.

## Revendications

1. Procédé de récolte de plantes comprenant :
a. le fait de prévoir un article destiné à la germination de semences et au développement de plantes, l'article comprenant (i) un milieu de développement sans sol (L3) qui favorise la germination de semences et la pénétration des racines des plantes en développement au sein de celui-ci, (ii) une couche de barrière lumineuse (L4) avec une pluralité d'ouvertures, une forme des ouvertures pouvant recevoir une ou plusieurs semence(s) dans chaque ouverture, les parties non ouvertes de la barrière lumineuse présentant une transmittance de la lumière inférieure à la quantité de transmittance de la lumière à travers n'importe quelle ouverture de la couche de barrière lumineuse, la coche de barrière lumineuse pouvant être séparée de, positionnée par-dessus et étant structurellement distincte du milieu de développement sans sol, et (iii) une couche supérieure (L5) qui est séparable de et positionnée par-dessus la couche de barrière lumineuse, la couche supérieure ayant une pluralité d'ouvertures ;
b. le déplacement des ouvertures de la couche de barrière lumineuse, de la couche supérieure, ou d'une combinaison de celles-ci par rapport au milieu de développement sans sol ; et
c. la découpe des tiges de plantes qui se développent par la pluralité d'ouvertures dans la couche de barrière lumineuse.

2. Procédé selon la revendication 1, dans lequel la couche supérieure (L5) est séparable de et positionnée par-dessus la couche de barrière lumineuse (L4), la couche supérieure possède une pluralité d'ouvertures, et les ouvertures de la couche supérieure chevauchent au moins une partie des ouvertures dans la couche de barrière lumineuse, le chevauchement des ouvertures étant suffisant pour permettre à la lumière d'atteindre les semences en germination et les plantes en développement.

3. Procédé selon la revendication 1, dans lequel l'article comprend en outre une couche de support inférieure (L2), ladite couche de support inférieure ayant une pluralité d'ouvertures à travers la couche de support inférieure qui contiennent une ou plusieurs masse(s) de racines ; la couche de support inférieure étant positionnée sous le milieu de développement sans sol (L3) et étant séparable de celui-ci.

4. Procédé selon la revendication 1, dans lequel ladite couche de barrière lumineuse (L4) forme une barrière avec une surface supérieure du milieu de développement sans sol (L3), ladite barrière empêchant les semences d'être positionnées entre les parties solides de la couche de barrière lumineuse et la surface supérieure du milieu de développement sans sol.

5. Procédé de récolte de plantes selon la revendication 1, dans lequel le déplacement comprend la séparation de la couche de barrière lumineuse (L4), de la couche supérieure (L5) ou d'une combinaison de celles-ci du milieu de développement sans sol (L3).

6. Procédé de récolte de plantes selon la revendication 1, dans lequel le déplacement comprend le coulissement d'une ou plusieurs de la couche de barrière lumineuse (L4), de la couche de support inférieure (L2), de la couche supérieure (L5) ou de combinaisons de celles-ci.

7. Procédé de récolte de plantes selon la revendication 1, dans lequel la découpe des tiges de plantes comprend le déplacement d'une lame (10) au sein des tiges de plantes.

8. Procédé de récolte de plantes selon la revendication 7, dans lequel le coulissement d'une ou plusieurs de la couche de barrière lumineuse (L4), de la couche de support inférieure (L2), de la couche supérieure (L5) ou de combinaisons de celles-ci découpe les tiges de plantes.

9. Article qui favorise la germination de semences et le développement de plantes comprenant :
une couche de support inférieure (L2) qui possède une pluralité d'ouvertures à travers la couche de support inférieure qui contiennent une ou plusieurs masse(s) de racines ;
un milieu de développement sans sol (L3) positionné par-dessus la couche de support inférieure et séparable de celle-ci, ledit milieu de développement sans sol favorisant la germination de semences et la pénétration des racines des plantes en développement au sein de celui-ci ;
une couche de barrière lumineuse (L4) avec une pluralité d'ouvertures formées pour contenir une semence, les parties non ouvertes de la couche de barrière lumineuse (L4) présentant une transmittance de la lumière inférieure à la quantité de transmittance de la lumière à travers n'importe quelle ouverture de la couche de barrière lumineuse, la couche de barrière lumineuse étant séparable de, positionnée par-dessus et structurellement distincte du milieu de développement sans sol, et une proximité de la surface inférieure de la couche de barrière lumineuse avec la couche de milieu de développement sans sol empêchant les semences d'être positionnées ou piégées entre les couches ; et
une couche supérieure (L5) qui est séparable de et positionnée par-dessus la couche de barrière lumineuse, la couche supérieure ayant une pluralité d'ouvertures, les ouvertures de la couche supérieure chevauchant au moins une partie des ouvertures de la couche de barrière lumineuse, le chevauchement étant suffisant pour permettre à la lumière d'atteindre les semences en germination et les plantes en développement.

10. Article selon la revendication 9, dans lequel la taille des ouvertures de la couche supérieure (L5) est sensiblement identique à celle des semences, et les ouvertures de la couche supérieure sont plus petites que les ouvertures de la couche de barrière lumineuse (L4).

11. Article selon la revendication 9, dans lequel la couche de barrière lumineuse (L4) de la couche supérieure (L5), ou la couche de barrière lumineuse et la couche supérieure comprennent un matériau fluorescent.

12. Article selon la revendication 9, dans lequel la couche supérieure (L5) est positionnée de manière coulissante par-dessus la couche de barrière lumineuse (L4) et les bords inférieurs des ouvertures de la couche supérieure et les bords supérieurs des ouvertures de la couche de barrière lumineuse sont formés pour découper les tiges de plantes.

13. Article selon la revendication 12, dans lequel une ou plusieurs de la couche de barrière lumineuse (L4) ou de la couche supérieure (L5) comprennent un matériau fluorescent, et une ou plusieurs semence(s) est/sont positionnée(s) dans une pluralité d'ouvertures de la couche de barrière lumineuse et par-dessus le milieu de développement sans sol.

14. Article selon la revendication 9, dans lequel la couche de barrière lumineuse (L4) comprend un matériau fluorescent et la forme de la pluralité d'ouvertures de la couche de barrière lumineuse correspond à la forme d'une optique de non-imagerie.

15. Procédé de plantation de semences comprenant :
le positionnement des semences dans une pluralité d'ouvertures d'une couche de barrière lumineuse (L4), dans lequel une couche supérieure (L5) est séparable de et positionnée par-dessus la couche de barrière lumineuse, la couche supérieure ayant une pluralité d'ouvertures, les ouvertures de la couche supérieure chevauchant tout ou partie de la surface des ouvertures de la couche de barrière lumineuse, le chevauchent étant suffisant pour permettre à la lumière d'éclairer les semences en germination et les plantes en développement ; et
dans lequel une majorité de la pluralité d'ouvertures de la couche de barrière lumineuse contient une semence, ladite couche de barrière lumineuse recouvrant un milieu de développement sans sol (L3) et étant séparable de celui-ci, le milieu de développement sans sol recouvrant une couche de support (L2) qui possède des ouvertures destinées à contenir une ou plusieurs masse(s) de racines qui se développe(nt) dans le milieu de développement sans sol.

16. Procédé selon la revendication 15, comprenant en outre l'irradiation d'une partie de la couche de barrière lumineuse (L4), la conversion d'une partie du rayonnement en une longueur d'onde plus longue, et la mise en contact d'une partie des semences en germination ou des plantes en développement avec le rayonnement à longueur d'onde plus longue.
